# EUROPEAN PATENT SPECIFICATION

(11) **EP 2 650 127 B1**
(45) Date of publication and mention of the grant of the patent: **15.11.2017**
(21) Application number: 11846140.9
(22) Date of filing: 06.12.2011
(51) Int. Cl.: B32B 27/38, B32B 17/10, C03C 17/32

(54) **ANTI-FOGGING ARTICLE AND METHOD FOR PRODUCING SAME**
ANTIBESCHLAGSARTIKEL UND HERSTELLUNGSVERFAHREN DAFÜR
ARTICLE ANTICONDENSATION ET SON PROCÉDÉ DE PRODUCTION

(30) Priority: 07.12.2010 JP 2010272791
(43) Date of publication of application: 16.10.2013
(73) Proprietor: Asahi Glass Company, Limited, Tokyo 100-8405 (JP)
(72) Inventor: KISHIKAWA, Noriko, Tokyo 100-8405 (JP); ISHIOKA, Hideki, Tokyo 100-8405 (JP); SAITO, Tsuyoshi, Tokyo 100-8405 (JP)
(74) Representative: Müller-Boré & Partner Patentanwälte PartG mbB
(86) International application number: PCT/JP2011/078207
(87) International publication number: WO 2012/077686

(56) References cited:
- WO-A1-2005/030664
- WO-A1-2007/052710
- WO-A1-2009/151086
- JP-A- 6 065 524
- JP-A- 2008 214 751
- JP-A- 2008 273 067
- JP-A- 2010 228 958
- US-A1- 2009 011 244

## Description

### TECHNICAL FIELD

The present invention relates to an anti-fogging article and its production process.

### BACKGROUND ART

A transparent substrate such as glass or plastics, scatters transmitted light since fine water droplets are deposited on the surface of the substrate when the surface has a dew-point temperature or lower, thus leading to impairment in transparency, i.e. a state of "fogging". As a method for preventing the fogging, heretofore, various proposals have been made.

Specifically, (1) a method of treating the substrate surface with a surfactant to lower the surface tension of deposited water droplets, (2) a method of imparting hydrophilic groups to the substrate surface using a hydrophilic resin or a hydrophilic inorganic compound so that the substrate surface would be hydrophilic, (3) a method of warming the substrate by providing e.g. a heater so that the substrate surface would be kept at a temperature higher than the dew-point temperature, and (4) a method of forming a water-absorptive resin layer on the substrate surface so that fine water droplets formed not he substrate surface are absorbed and removed, and/or the atmospheric humidity on the substrate surface is lowered, have been known.

However, with the above methods (1) and (2), since a water film will be formed on the formed film surface, the outer appearance is likely to change e.g. by distortion or formation of water droplets when the substrate surface is stored in high humidity environment for a long period of time, and clammy feeling when used is somewhat uncomfortable in some cases. Further, the method (3) costs very high since an energy for application of electricity is always required, although the anti-fogging performance will last semi-permanently. Whereas, the method (4) is considered to be a method particularly excellent as a means to prevent fogging, since there will be no change in the outer appearance and favorable feeling when used is obtained in many cases as no water is present on the surface and in addition, excellent anti-fogging property will be obtained with no running cost required.

As an anti-fogging technology utilizing such a water-absorptive compound layer as in (4), specifically, an anti-fogging article having a water-absorptive crosslinked resin layer obtained from a polyepoxide (Patent Documents 1 and 3 an anti-fogging article having an anti-fogging film having a low water-absorptive crosslinked resin layer and a highly water-absorptive crosslinked resin layer laminated in order on the substrate surface (Patent Document 2) have been proposed.

However, although the water-absorptive crosslinked resin layer in the anti-fogging article disclosed in Patent Documents 1 and 3 is excellent in the anti-fogging property, it has drawbacks in durability such as the abrasion resistance and the peel resistance. The anti-fogging film disclosed in Patent Document 2 has durability improved to a certain extent while having excellent anti-fogging property, but has a drawback in that the outer appearance is impaired when the durability is to be increased. Thus, an anti-fogging article having an anti-fogging film having excellent anti-fogging property and having both durability such as the abrasion resistance and the peel resistance and favorable outer appearance has been desired.

### PRIOR ART DOCUMENTS

### PATENT DOCUMENTS

Patent Document 1: WO2007/052710
Patent Document 2: JP-A_2008-273067
Patent document 3: WO 2009/151086 A1

### DISCLOSURE OF INVENTION

### TECHNICAL PROBLEM

The object of the present invention is to provide an anti-fogging article having excellent anti-fogging property, and having excellent durability such as the abrasion resistance and the peel resistance, and outer appearance, and its production process.

### SOLUTION TO PROBLEM

The present invention has been made to achieve the above object and provides the following.

The anti-fogging article of the present invention has a substrate and an anti-fogging film on at least part of the surface of the substrate, wherein the anti-fogging film comprises a resin underlayer and a water-absorptive resin layer laminated in order on the substrate surface; the water-absorptive resin layer is a water-absorptive resin layer composed mainly of a first cured epoxy resin obtained by reacting a water-absorptive resin layer-forming composition containing a first polyepoxide component consisting of a low molecular weight polyepoxide having a molecular weight of from 200 to 800 and a high molecular weight polyepoxide having a molecular weight of from 900 to 2,000 in a mass ratio of the low molecular weight polyepoxide: the high molecular weight polyepoxide of from 30:70 to 70:30, and a first curing agent; and the resin underlayer is a resin underlayer composed mainly of a second cured epoxy resin obtained by reacting a resin underlayer-forming composition containing a second polyepoxide component, tetraalkoxysilane and/or its oligomer and a second curing agent, having water absorption property lower than that of the water-absorptive resin layer.

The present invention further provides a process for producing the above anti-fogging article, which comprises a step of applying the resin underlayer-forming composition containing the second polyepoxide component, tetraalkoxysilane and/or its oligomer and the second curing agent, to the surface of a substrate, followed by reaction to form the resin underlayer composed mainly of the second cured epoxy resin; and a step of applying, to the surface of the resin underlayer, the water-absorptive resin layer-forming composition containing the first polyepoxide component consisting of the low molecular weight polyepoxide having a molecular weight of from 200 to 800 and the high molecular weight polyepoxide having a molecular weight of from 900 to 2,000 in a mass ratio of the low molecular weight polyepoxide:the high molecular weight polyepoxide of from 30:70 to 70:30, and the first curing agent, followed by reaction to form the water-absorptive resin layer composed mainly of the first cured epoxy resin.

### ADVANTAGEOUS EFFECTS OF INVENTION

The anti-fogging article of the present invention is excellent in the anti-fogging property, and is excellent in the durability such as the abrasion resistance and the peel resistance, and the outer appearance. Further, according to the production process of the present invention, an anti-fogging article having excellent anti-fogging property, durability and outer appearance can be obtained.

### DESCRIPTION OF EMBODIMENTS

Now, embodiments of the present invention will be described below. However, the present invention is by no means restricted to the following embodiments.

### <Anti-fogging article>

The anti-fogging article of the present invention has a substrate and an anti-fogging film on at least part of the surface of the substrate, wherein the anti-fogging film has a resin underlayer and a water-absorptive resin layer laminated in order on the substrate surface; the water-absorptive resin layer is a water-absorptive resin layer composed mainly of a first cured epoxy resin obtained by reacting a water-absorptive resin layer-forming composition containing a first polyepoxide component consisting of a low molecular weight polyepoxide having a molecular weight of from 200 to 800 and a high molecular weight polyepoxide having a molecular weight of from 900 to 2,000 in a mass ratio of the low molecular weight polyepoxide: the high molecular weight polyepoxide of from 30:70 to 70:30, and a first curing agent; and the resin underlayer is a resin underlayer composed mainly of a second cured epoxy resin obtained by reacting a resin underlayer-forming composition containing a second polyepoxide component, tetraalkoxysilane and/or its oligomer and a second curing agent, having water absorption property lower than that of the water-absorptive resin layer.

In the anti-fogging article of the present invention, with respect to the polyepoxides as the material components for the cured epoxy resin mainly constituting the water-absorptive resin layer, under the assumption that the high molecular weight polyepoxide contributes to an improvement in the durability such as the abrasion resistance and the low molecular weight polyepoxide has a function to improve the outer appearance of the cured epoxy resin obtainable from the high molecular weight polyepoxide, it was found that an anti-fogging article having excellent anti-fogging property and having excellent durability such as the abrasion resistance and outer appearance can be obtained by adjusting the mass ratio of the low molecular weight polyepoxide: the high molecular weight polyepoxide to be from 30:70 to 70:30.

Further, with respect to the anti-fogging article of the present invention, an anti-fogging article having excellent peel resistance can be obtained by constituting the anti-fogging film by the water-absorptive resin layer and the resin underlayer each composed mainly of a cured epoxy resin, in a relation such that the water absorption property of the water-absorptive resin layer>the water absorption property of the resin underlayer, in combination.

Of the water-absorptive resin layer having high water absorption property, the adhesion at the adhesive interface tends to lower by such factors that the interfacial stress is accumulated on the adhesive interface by repetition of significant expansion/shrinkage accompanying the high water absorption property, various ion components included together with water reach the adhesive interface, and further, the ion components are eluted from an adherend layer such as a substrate into the interface by the influences of moisture which had reached the adhesive interface.

Accordingly, by providing, between the substrate and the water-absorptive resin layer, a resin underlayer having water absorption property lower than that of the water-absorptive resin layer, and composed mainly of a cured epoxy resin of the same type as the water-absorptive resin layer, the water-absorptive resin layer and the resin underlayer have high adhesion to each other since they are constituted by resins of the same type, and further, since the degree of expansion/shrinkage of the resin underlayer is low due to low water absorption property, the interfacial stress to be accumulated on the adhesive interface with the substrate is relaxed and in addition, the resin underlayer has an effect to inhibit moisture and ion components from reaching the adhesive interface with the substrate, whereby the adhesion to the substrate interface is improved, and accordingly, the peel resistance is improved as a whole and excellent durability is obtained.

### [1] Substrate

The substrate to be used for the anti-fogging article of the present invention is not particularly limited so long as it is a substrate made of a material to which impartment of anti-fogging property is usually required. It may be suitably a substrate made of glass, a plastic, a metal, a ceramic or a combination thereof (e.g. a composite material or a laminated material), and more suitably, a transparent substrate made of glass or a plastic, a mirror. Glass may, for example, be conventional soda lime glass, borosilicate glass, alkali-free glass or quartz glass, and soda lime glass is particularly preferred. Further, the plastic may, for example, be an acrylic resin such as polymethyl methacrylate, an aromatic polycarbonate resin such as polyphenylene carbonate, or an aromatic polyester resin such as polyethylene terephthalate (PET), and among them, it is preferably polyethylene terephthalate (PET), polyphenylene carbonate. The substrate may have a plate shape or have a curvature on the entire surface or a part thereof. The thickness of the substrate is properly selected depending upon the particular use of the anti-fogging article, and is usually preferably from 1 to 10 mm.

Further, it is preferred that the substrate has reactive groups on the surface. The reactive groups are preferably hydrophilic groups, and the hydrophilic groups are preferably hydroxy groups. Further, e.g. oxygen plasma treatment, corona discharge treatment or ozone treatment may be applied to the substrate to decompose and remove organic substances deposited on the surface, or a fine convexo-concave structure may be formed on a surface to make the substrate surface hydrophilic. Further, glass or a metal oxide usually has hydroxy groups on its surface.

Further, for the purpose of increasing the adhesion of the substrate to the resin underlayer to be formed on its surface in the anti-fogging article of the present invention, a thin film of a metal oxide such as silica, alumina, titania or zirconia, or a thin film of an organic group-containing metal oxide, may be formed on the surface of the substrate of e.g. glass.

The thin film of a metal oxide may be formed from a metal compound having a hydrolyzable group by means of a known method such as a sol-gel method. Such a metal compound is preferably a tetraalkoxysilane, tetraisocyanate silane or an oligomer thereof (i.e. a partial hydrolyzed condensate thereof).

Further, the thin film of an organic group-containing metal oxide is obtained by treating the substrate surface with an organic metal type coupling agent. As the organic metal type coupling agent, a silane type coupling agent, a titanium type coupling agent, an aluminum type coupling agent may be used, and a silane type coupling agent is preferably used. Hereinafter, a coupling agent for preliminarily treating the substrate surface will be referred to as "coupling agent for surface treatment".

### [2] Anti-fogging film

In the anti-fogging article of the present invention, the anti-fogging film formed on at least part of the surface of the substrate has a resin underlayer and a water-absorptive resin layer in this order from the substrate side.

### [2-1] Water-absorptive resin layer

The water-absorptive resin layer constituting the anti-fogging film is a water absorption resin layer composed mainly of a first cured epoxy resin obtained by reacting a water-absorptive resin layer-forming composition containing a first polyepoxide component consisting of a low molecular weight polyepoxide having a molecular weight of from 200 to 800 and a high molecular weight polyepoxide having a molecular weight of from 900 to 2,000 in a mass ratio of the low molecular weight polyepoxide:the high molecular weight polyepoxide of from 30:70 to 70:30, and a first curing agent.

The water-absorptive resin layer in the anti-fogging article of the present invention has water absorption property sufficient to show sufficient anti-fogging property when formed into an anti-fogging film, and its water absorption property is high as compared with the water absorption property of the resin underlayer provided between the substrate and the water-absorptive resin layer. The water absorption properties of the water-absorptive resin and the resin underlayer are relative to each other, and hereinafter, the water-absorptive resin composed mainly of the first cured epoxy resin constituting the water-absorptive resin layer will sometimes be referred to as a highly water-absorptive resin, and the resin composed mainly of the after-mentioned second cured epoxy resin in the resin underlayer will sometimes be referred to as a low water-absorptive resin. Since the water absorption properties of both the resins are relative to each other, "high water-absorptive" and "low water-absorptive" of these resins are not meant to indicate high/low water absorption property with a definite threshold.

Here, to specifically indicate the water absorption property of the highly water-absorptive resin constituting the water-absorptive resin layer, the saturated water absorption measured by the following method is preferably at least 200 mg/cm³, more preferably at least 300 mg/cm³. By the saturated water absorption of the highly water-absorptive resin constituting the water-absorptive resin layer being the above value, sufficient anti-fogging property can be secured. Further, with a view to preventing the durability of the anti-fogging film from being low, the saturated water absorption of the water-absorptive resin layer is preferably at most 900 mg/cm³, more preferably at most 500 mg/cm³.

### (Method of measuring saturated water absorption)

A resin layer to be a test sample is formed on a soda lime glass substrate of 3 cm × 4 cm × 2 mm in thickness, and the substrate is dipped in a 25°C constant temperature water bath for 1 hour and taken out, and the moisture on the surface is wiped away by waste cloth, and the moisture amount (I) in the entire substrate provided with resin layer is measured by a micro-moisture analyzer. Further, the moisture amount (II) is measured in the same procedure with respect to the substrate alone. The value obtained by subtracting the moisture amount (II) from the moisture amount (I) is divided by the volume of the resin layer before water absorption is regarded as the saturated water absorption. Measurement of the moisture amount is carried out by using a micro-moisture analyzer FM-300 (manufactured by Kett Electric Laboratory) as follows. A measurement sample is heated at 120°C, moisture discharged from the sample is adsorbed by molecular sieves in the micro-moisture analyzer, and the mass change in the molecular sieves is measured as the moisture amount. Further, the time when the mass change per 25 seconds becomes at most 0.05 mg is regarded as the end point.

The saturated water absorption is an index for the water absorption property of a resin constituting the water-absorptive resin layer, and as an index for the water absorption property of the water absorption resin layer itself determined by the resin constituting the water-absorptive resin layer and the thickness of the layer, in this specification, as the case requires, "water absorption anti-fogging property" as defined below is employed.

The water absorption anti-fogging property is indicated by the anti-fogging time (seconds) until fogging is visually confirmed when the surface of the anti-fogging film of an anti-fogging article after being left to stand in an environment at 20°C under a relative humidity of 50% for 1 hour, is held over a warm water bath at 40°C.

When the water absorption property of the water-absorptive resin layer formed on the anti-fogging article of the present invention is represented by the water absorption anti-fogging property as an index, the water absorption anti-fogging property is at least 30 seconds, more preferably at least 50 seconds, particularly preferably at least 100 seconds.

From the relation between the saturated water absorption of the highly water-absorptive resin constituting the water-absorptive resin layer and the water absorption anti-fogging property of the water-absorptive resin layer, the thickness of the water-absorptive resin layer of the anti-fogging article of the present invention is preferably at least 3 µm, more preferably at least 10 µm, whereby the saturated water absorption necessary as the entire anti-fogging film will easily be secured. On the other hand, with a view to preventing the durability of the anti-fogging film from being low, the thickness of the water-absorptive resin layer is preferably at most 50 µm, more preferably at most 30 µm.

Here, since the anti-fogging performance required for each anti-fogging article varies depending upon particular purpose of use, the thickness is properly set depending upon the performance required.

The cured epoxy resin mainly constituting the water-absorptive resin layer is the first cured epoxy resin obtained by reacting the first polyepoxide component and the first curing agent, and is the main component to make the water-absorptive resin layer have the above water absorption property.

In this specification, a polyepoxide means a compound having at least two epoxy groups. The polyepoxide includes a low molecular weight compound, an oligomer and a polymer. The polyepoxide component is a component consisting of at least one type of polyepoxide, and hereinafter sometimes referred to as a base component as the case requires. Further, the curing agent is a compound having at least two reactive groups reactive with the epoxy group of the polyepoxide, and is meant to include an addition polymerization type curing agent of a type to be addition-polymerized to the polyepoxide by a reaction, a condensation type curing agent of a type to be polycondensed to the polyepoxide by a reaction, and a catalyst type curing agent which is a reaction catalyst such as a Lewis acid, and which catalyzes polymerization of polyepoxides. The catalyst type curing agent includes a thermosetting type and a photocurable type, and they will generally be referred to as a catalyst type curing agent.

Further, the cured epoxy resin means a cured product obtained by reaction of the base component and the curing agent, having a structure such that the polyepoxide is crosslinked by e.g. the addition polymerization type curing agent and is formed into a three dimensional structure, and/or a structure such that the polyepoxides are linearly or three-dimensionally polymerized. The water absorption property of the cured epoxy resin mainly depends on the amount of hydrophilic groups such as hydroxy groups and hydrophilic chains (such as polyoxyethylene group) derived from the base component.

Further, the water absorption property also depends on the degree of crosslink in the cured epoxy resin. It is considered that when the number of crosslinked sites contained in the cured epoxy resin per a certain unit amount is large, the cured epoxy resin has a dense three-dimensional network structure, whereby the space for water retention tends to be small, and such a resin has low water absorption property. On the other hand, it is considered that when the number of crosslinked sites contained per unit amount is small, the space for water retention tends to be large, and such a resin has high water absorption property. The glass transition point of the cured epoxy resin is deeply related to the number of crosslinked sites in the cured epoxy resin, and it is commonly considered that a resin having a high glass transition point has a large number of crosslinked sites contained per a certain unit amount.

Accordingly, usually, it is preferred to control the glass transition point of the cured epoxy resin to be low so as to increase the anti-fogging performance, and to control the glass transition point of the cured epoxy resin to be high so as to increase the durability. Considering these points, the glass transition point of the highly water-absorptive first cured epoxy resin mainly constituting the water-absorptive resin layer is preferably from -20 to 60°C, more preferably from -5 to 40°C, although it depends on the type of the cured epoxy resin.

The glass transition point is a value measured in accordance with JIS K7121. Specifically, a resin layer to be a test sample is formed on a substrate, the substrate is left to stand in an environment at 20°C under a relative humidity of 50% for 1 hour, whereupon the glass transition point is measured by a differential scanning calorimeter. The heating rate at the time of measurement is 10°C/min.

Now, the first cured epoxy resin mainly constituting the absorptive resin layer, obtained by reacting the first polyepoxide component and the first curing agent, will be described below.

### (First polyepoxide component)

The first polyepoxide component which is a material component of the first cured epoxy resin comprises a low molecular weight polyepoxide having a molecular weight of from 200 to 800 and a high molecular weight polyepoxide having a molecular weight of from 900 to 2,000, in a mass ratio of the low molecular weight polyepoxide:the high molecular weight polyepoxide of from 30:70 to 70:30.

The molecular weight of the high molecular weight polyepoxide to be used in the present invention is from 900 to 2,000, preferably from 900 to 1,500, more preferably from 900 to 1,450. The high molecular weight polyepoxide is considered to impart high water absorption property and the durability such as the abrasion resistance to the obtainable first cured epoxy resin as described above. When it is used in combination with the low molecular weight polyepoxide in the above ratio of the present invention, by the molecular weight of the high molecular weight polyepoxide being within the above range, sufficient durability such as the abrasion resistance of the first cured epoxy resin can be secured. In the present invention, the high molecular weight polyepoxide may be used alone or in combination of two more.

The molecular weight of the low molecular weight polyepoxide to be used in the present invention is from 200 to 800, preferably from 300 to 700, more preferably from 300 to 650. The low molecular weight polyepoxide has a role to maintain favorable outer appearance of the first cured epoxy resin obtainable in combination with the high molecular weight polyepoxide as described above. When it is used in combination with the high molecular weight polyepoxide in the above ratio of the present invention, by the molecular weight of the low molecular weight polyepoxide being within the above range, a favorable outer appearance of the first cured epoxy resin can be secured without insufficient wettability of a coating fluid at the time of coating with a solution, irregularities of the coating film, and the like. In the present invention, the low molecular weight polyepoxide may be used alone or in combination of two or more.

In this specification, the molecular weight means the mass average molecular weight (Mw) unless otherwise specified. Further, the mass average molecular weight (Mw) in this specification means a mass average molecular weight as measured by means of gel permeation chromatography (GPS) based on polystyrene as a standard.

The high molecular weight polyepoxide and the low molecular weight polyepoxide constituting the first polyepoxide component may be compounds in the same classification except for the difference in the molecular weight. Now, specific compounds to be used as the high molecular weight polyepoxide and the low molecular weight polyepoxide will be described below.

As the polyepoxide constituting the first polyepoxide component, a glycidyl ether type polyepoxide, a glycidyl ester type polyepoxide, a glycidylamine type polyepoxide, a cyclic aliphatic polyepoxide and the like, which are used as a material component of a usual cured epoxy resin, after their molecular weights are adjusted to be within the above range, can be used. Further, the number of epoxy groups per one molecule of the polyepoxide in the first polyepoxide component is not particularly limited so long as at least 2 on average, and is preferably from 2 to 10, and in the case of the high molecular weight polyepoxide, it is more preferably from 3 to 8, further preferably from 3 to 7, and in the case of the low molecular weight polyepoxide, it is more preferably from 2 to 8, further preferably from 2 to 5.

The glycidyl ether type polyepoxide is a polyepoxide (or an oligomer of the polyepoxide) having a structure such that phenolic hydroxy groups of a polyphenol having at least two phenolic hydroxy groups or alcoholic hydroxy groups of a polyol having at least two alcoholic hydroxy groups are substituted by glycidyloxy groups. The glycidyl ester type polyepoxide is a polyepoxide having a structure such that carboxy groups of a polycarboxylic acid having at least two carboxy groups substituted by glycidyloxycarbonyl groups. The glycidylamine type polyepoxide is a polyepoxide having a structure such that of an amine having at least two hydrogen atoms bonded to a nitrogen atom, hydrogen atoms bonded to the nitrogen atom are substituted by glycidyl groups. Further, the cyclic aliphatic polyepoxide is a polyepoxide having an alicyclic hydrocarbon group (such as a 2,3-epoxycyclohexyl group) in which an oxygen atom is bonded to adjacent carbon atoms in a ring.

Among such various polyepoxides, the polyepoxide constituting the first polyepoxide component is preferably a polyepoxide having no aromatic nucleus, whereby the obtainable cured epoxy resin has high absorption property. A cured epoxy resin obtainable by using a polyepoxide having an aromatic nucleus, for example, a glycidyl ether type polyepoxide derived from a polyphenol, is considered to have low water absorption property, since moisture is hardly included in the three-dimensional network structure resulting from the aromatic nucleus being rigid.

The polyepoxide having no aromatic nucleus may, for example, be specifically a glycidyl ether type polyepoxide derived from a polyol, a glycidyl ester type polyepoxide, a glycidylamine type polyepoxide or a polyepoxide having no aromatic nucleus among cyclic aliphatic polyepoxides, and in the present invention, among them, a glycidyl ether type polyepoxide derived from a polyol having no aromatic nucleus is particularly preferred.

The material polyol of the glycidyl ether type polyepoxide derived from a polyol having no aromatic nucleus may be a polyol having no aromatic nucleus such as an aliphatic polyol or an alicyclic polyol, and the number of hydroxy groups per one molecule of the polyol is preferably from 2 to 10, more preferably the number mentioned as the preferred number of epoxy groups for each of the high molecular weight polyepoxide and the low molecular weight polyepoxide. Hereinafter, such a polyol having no aromatic nucleus will be referred to as an aliphatic/alicyclic polyol. The aliphatic/alicyclic polyol may, for example, be an alkane polyol, an etheric oxygen atom-containing polyol, a sugar alcohol, a polyoxyalkylene polyol or a polyester polyol. The polyoxyalkylene polyol is obtained by subjecting a monoepoxide such as propylene oxide or ethylene oxide to ring-opening addition polymerization to a polyol having a relatively low molecular weight such as an alkane polyol, an etheric oxygen atom-containing polyol or a sugar alcohol. The polyester polyol may, for example, be a compound having a structure such that an aliphatic diol and an aliphatic dicarboxylic acid are condensed, or a compound having a structure such that a cyclic ester has underwent ring-opening polymerization.

The glycidyl ether type polyepoxide derived from an aliphatic/alicyclic polyol to be preferably used in the present invention may, for example, be specifically ethylene glycol diglycidyl ether, propylene glycol diglycidyl ether, dipropylene glycol diglycidyl ether, neopentyl glycol diglycidyl ether, 1,4-butanediol diglycidyl ether, 1,6-hexanediol diglycidyl ether, glycerin polyglycidyl ether, diglycerin polyglycidyl ether, trimethylolpropane polyglycidyl ether, sorbitol polyglycidyl ether, pentaerythritol polyglycidyl ether, polyethylene glycol diglycidyl ether, polyoxypropylene diol diglycidyl ether, polyoxypropylene triol triglycidyl ether or poly(oxypropylene/oxyethylene)triol triglycidyl ether.

Among them, more preferably used as the glycidyl ether type polyepoxide derived from an aliphatic/alicyclic polyol is a polyepoxide having an average number of glycidyloxy groups per one molecule of preferably from 2 to 10, more preferably the number mentioned as the preferred number of epoxy groups for each of the high molecular weight polyepoxide and the low molecular weight polyepoxide.

Such a polyepoxide may, for example, be a triglycidyl ether of a triol, a tetraglycidyl ether of a tetraol, a mixture of a triglycidyl ether of a triol with a diglycidyl ether of the same triol, a tetraglycidyl ether of a tetraol, a mixture of a triglycidyl ether with a diglycidyl ether, or a mixture of a triglycidyl ether of a triol with a diglycidyl ether of a diol. More specifically, it may, for example, be a glycerin polyglycidyl ether, a diglycerin triglycidyl ether, a polyglycerin polyglycidyl ether, a trimethylolpropane polyglycidyl ether, a pentaerythritol polyglycidyl ether, or a sorbitol polyglycidyl ether, having an average number of glycidyloxy groups per one molecule of preferably from 2 to 10, more preferably the number mentioned as the preferred number of epoxy groups for each of the high molecular weight polyepoxide and the low molecular weight polyepoxide.

Further, the polyepoxide having no aromatic nucleus other than the glycidyl ether type polyepoxide derived from an aliphatic/alicyclic polyol may, for example, be 3,4-epoxycyclohexylmethyl-3',4'-epoxycyclohexanecarboxylate or bis(3,4-epoxycyclohexylmethyl)adipate, which is a cyclic aliphatic polyepoxide.

Among them, as the low molecular weight polyepoxide, glycerin polyglycidyl ether, polyglycerin polyglycidyl ether, sorbitol polyglycidyl ether or the like, which is a glycidyl ether type polyepoxide derived from an aliphatic/alicyclic polyol is particularly preferably used in the present invention. Further, the average number of glycidyloxy groups per molecule in the low molecular weight polyepoxide is preferably from 2 to 8, more preferably from 2 to 4. The epoxy equivalent (gram [g/eq] of the resin containing 1 g equivalent of epoxy groups) of the low molecular weight polyepoxide, which indicates the relation between the preferred molecular weight of the low molecular weight polyepoxide and the average number of epoxy groups per one molecule of the polyepoxide, is preferably from 120 to 200 g/eq, more preferably from 120 to 180 g/eq.

Further, as the high molecular weight polyepoxide, polyethylene glycol polyglycidyl ether, polyglycerin polyglycidyl ether, polyethylene glycol sorbitol polyglycidyl ether or the like, which is a glycidyl ether type polyepoxide derived from an aliphatic/alicyclic polyol, is particularly preferably used in the present invention. Further, the average number of glycidyloxy groups per one molecule of the high molecular weight polyepoxide is preferably from 3 to 8, more preferably from 3 to 6. Further, the epoxy equivalent of the high molecular weight polyepoxide calculated in the same manner as the low molecular weight polyepoxide is preferably from 140 to 200 g/eq, more preferably from 150 to 190 g/eq.

The first polyepoxide component as the material component of the first cured epoxy resin to be used in the present invention comprises at least one member of the high molecular weight polyepoxide and at least one member of the low molecular weight polyepoxide. The mass ratio of the low molecular weight polyepoxide:the high molecular weight polyepoxide in the first polyepoxide component is from 30:70 to 70:30, preferably from 40:60 to 70:30, more preferably from 40:60 to 60:40. When the mass ratio of both the polyepoxides constituting the first polyepoxide component is within the above range, both sufficient durability such as the abrasion resistance and favorable outer appearance of the first cured epoxy resin can be secured.

A preferred combination of the low molecular weight polyepoxide and the high molecular weight polyepoxide constituting the first polyepoxide component to be used in the present invention may, specifically, be a combination of, as the low molecular weight polyepoxide, at least one member selected from the group consisting of glycerin polyglycidyl ether, polyglycerin polyglycidyl ether and sorbitol polyglycidyl ether having a molecular weight of from 200 to 800, having an average number of epoxy groups per one molecule of from 2 to 4 and having an epoxy equivalent of from 120 to 180 g/eq, and as the high molecular weight polyepoxide, at least one member selected from the group consisting of polyethylene glycol polyglycidyl ether, polyglycerin polyglycidyl ether and polyethylene glycol sorbitol polyglycidyl ether, having a molecular weight of from 900 to 2,000, having an average number of epoxy groups per one molecule of from 3 to 6 and having an epoxy equivalent of from 150 to 190 g/eq, in a mass ratio of the low molecular weight polyepoxide:the high molecular weight polyepoxide of from 40:60 to 60:40.

As both of the low molecular weight polyepoxide and the high molecular weight polyepoxide constituting the first polyepoxide component, commercially available products may be used. As such commercially available products, specifically, the low molecular weight polyepoxide may, for example, be Denacol EX-313 (Mw:383, average number of epoxy groups: 2.0 groups/molecule) and Denacol EX-314 (Mw:454, average number of epoxy groups: 2.3 groups/molecule) which are glycerin polyglycidyl ethers, and Denacol EX-512 (Mw:630, average number of epoxy groups: 4.1 groups/molecule) which is a polyglycerin polyglycidyl ether, tradenames, each manufactured by Nagase ChemteX Corporation.

Further, the high molecular weight polyepoxide may, for example, be Denacol EX-1410 (Mw: 988, average number of epoxy groups: 3.5 groups/molecule), Denacol EX-1610 (Mw: 1130, average number of epoxy groups: 4.5 groups/molecule) and Denacol EX-610U (Mw: 1408, average number of epoxy groups: 4.5 groups/molecule) which are aliphatic polyglycidyl ethers, and Denacol EX-521 (Mw: 1294, average number of epoxy groups: 6.3 groups/molecule) which is a polyglycerin polyglycidyl ether, tradenames, each manufactured by Nagase ChemteX Corporation.

As the sorbitol polyglycidyl ether, Denacol EX-622 (Mw: 930, average number of epoxy groups: 4.9 groups/molecule) may, for example, be mentioned.

### (First curing agent)

The first cured epoxy resin mainly constituting the water-absorptive resin layer is the first cured epoxy resin obtained by reacting the first polyepoxide component and the first curing agent.

As the first curing agent, it is preferred to use an addition polymerization type curing agent having at least two reactive groups which react with the epoxy group of the polyepoxide, which is of a type to be addition-polymerized to the polyepoxide by a reaction. Further, it is more preferred to use, in addition to the addition polymerization type curing agent, a catalyst type curing agent which is a reaction catalyst such as a Lewis acid, and which catalyzes polymerization of polyepoxides, in combination.

This is because some catalyst type curing agents are expected to have an effect to accelerate progress of crosslinking of the addition polymerization type curing agent and to reduce drawbacks at the crosslinked moiety formed by some addition polymerization type curing agents. As one example of the drawbacks, coloring of the cured epoxy resin due to degeneration of the crosslinked moiety by the thermal load may be mentioned.

In the addition polymerization type curing agent, the reactive groups which react with the epoxy group may, for example, be amino groups having active hydrogen, carboxy groups or thiol groups. That is, the addition polymerization type curing agent is preferably an amino group having at least two amino groups having active hydrogen, a compound having at least two carboxy groups or a compound having at least two thiol groups, more preferably the above amino compound having active hydrogen. The compound having at least two such reactive groups may, for example, be specifically a polyamine, a polycarboxylic acid anhydride, a polyamide or a polythiol, and in the present invention, a polyamine or a polycarboxylic acid anhydride is preferably used.

As mentioned above, the first polyepoxide component to be used for the first cured epoxy resin which is the main body of the water-absorptive resin layer in the present invention, preferably comprises the above two polyepoxides having no aromatic nucleus, differing in the molecular weight, with a view to obtaining high water absorption property. From the same reason, the addition polymerization type curing agent as one of the reactive materials of the first cured epoxy resin is also preferably a compound having no aromatic nucleus. That is, even if the first polyepoxide component consists of compounds having no aromatic nucleus, if the addition polymerization type curing agent to be used has an aromatic nucleus, the cured epoxy resin obtainable from the combination with the first curing agent which is the addition polymerization type curing agent is a cured epoxy resin having a relatively large amount of aromatic nuclei, and it may have insufficient water absorption property.

Accordingly, the addition polymerization type curing agent used as the first curing agent is preferably a polyamine or a polycarboxylic acid anhydride having no aromatic nucleus, particularly preferably a polyamine having no aromatic nucleus. The polyamine is preferably a polyamine having from 2 to 4 amino groups having active hydrogen, and the polycarboxylic acid anhydride is preferably a dicarboxylic acid anhydride, a tricarboxylic acid anhydride or a tetracarboxylic acid anhydride.

The polyamine having no aromatic nucleus may be an aliphatic polyamine compound or an alicyclic polyamine compound. Such a polyamine may, for example, be specifically ethylenediamine, triethylenediamine, triethylenetetramine, tetraethylenepentamine, hexamethylenediamine, polyoxyalkylene polyamine, isophoronediamine, menthenediamine or 3,9-bis(3-aminopropyl)-2,4,8,10-tetraoxaspiro(5,5)undecane.

The polyoxyalkylene polyamine is a polyamine having a structure such that hydroxy groups of a polyoxyalkylene polyol are substituted by amino groups, and it may, for example, be a compound having from 2 to 4 amino groups having a structure such that hydroxy groups of a polyoxypropylene polyol having from 2 to 4 hydroxy groups are substituted by amino groups having active hydrogen. The molecular weight per amino group is preferably at most 1,000, particularly preferably at most 500.

The polycarboxylic acid anhydride having no aromatic nucleus may, for example, be succinic anhydride, methyltetrahydrophthalic anhydride, hexahydrophthalic anhydride or 4-methylhexahydrophthalic anhydride.

Further, the catalyst type curing agent preferably used together with the addition polymerization type curing agent as the first curing agent may be a curing catalyst such as a tertiary amine, an imidazole, a Lewis acid, an onium salt, a dicyandiamide, an organic acid dihydrazide or a phosphine. Such a catalyst type curing agent may, for example, be specifically 2-methylimidazole, 2-ethyl-4-methylimidazole, tris(dimethylaminomethyl)phenol, a boron trifluoride/amine complex, dicyandiamide, diphenyliodonium hexafluorophosphate, or triphenylsulfonium hexafluorophosphate.

Here, the catalyst type curing agent included in the first curing agent may be a compound having an aromatic nucleus, since it does not substantially influence the water absorption property of the obtainable cured epoxy resin even though it is a compound having an aromatic nucleus, as its amount is small relative to the first polyepoxide component, as described below. An onium salt such as diphenyliodonium hexafluorophosphate or triphenylsulfonium hexafluorophosphate mentioned as the catalyst type curing agent is a catalyst type curing agent which is decomposed by light such as ultraviolet rays to form a Lewis acid catalyst, and is usually used as a catalyst type curing agent which provides a photocurable type cured epoxy resin.

Among them, the catalyst type curing agent to be used together with the addition polymerization type curing agent, preferably the polyamine having no aromatic nucleus in the present invention is preferably an imidazole compound such as 2-methylimidazole or 2-ethyl-4-methylimidazole.

The blend ratio of the first polyepoxide component and the first curing agent as the material components of the first cured epoxy resin to be used in the present invention is, in a case where the addition polymerization type curing agent is used as the first curing agent, preferably such that the equivalent ratio of reactive groups of the addition polymerization type curing agent to epoxy groups derived from the first polyepoxide component is at a level of from 0.8 to 1.2, more preferably at a level of from 1.0 to 1.1. When the equivalent ratio of the reactive groups of the addition polymerization type curing agent to epoxy groups is within the above range, a cured epoxy resin having a three-dimensional network structure moderately crosslinked so as to have the above water absorption property, can be obtained without decrease of the durability such as the abrasion resistance.

Further, in a case where the amino compound having active hydrogen which is an addition polymerization type curing agent is used as the first curing agent in the present invention, the ratio is preferably such that the equivalent ratio of amine's active hydrogens to epoxy groups derived from the first polyepoxide component is from 0.5 to 1.5, more preferably from 0.6 to 0.8. In the same manner as above, when the equivalent ratio of amine's active hydrogens to epoxy groups is within the above range, a cured epoxy resin having a three-dimensional network structure moderately crosslinked so as to have the above water absorption property can be obtained without remarkable yellowing.

Here, since if the mass ratio of the addition polymerization type curing agent used as the first curing agent to the first polyepoxide component is too high, physical properties of the obtainable first cured epoxy resin may be insufficient, the ratio of the addition polymerization type curing agent to the first polyepoxide component is preferably at most 40 mass%.

In a case where the catalyst type curing agent such as an imidazole compound is used in addition to the addition polymerization type curing agent as the first curing agent, the amount of use of the catalyst type curing agent is preferably from 1.0 to 20 mass%, more preferably from 1 to 10 mass%, particularly preferably from 1 to 5 mass% to the first polyepoxide component. When the amount of use of the catalyst type curing agent to the first polyepoxide component is at least 1.0 mass%, the reaction will sufficiently proceed, and sufficient water absorption property and durability of the obtainable first cured epoxy resin will be realized. Further, when the amount of use of the catalyst type curing agent to the first polyepoxide component is at most 20 mass%, problems in the outer appearance such as yellowing of the obtainable first cured epoxy resin due to remaining of residue of the catalyst type curing agent in the cured epoxy resin are likely to be suppressed.

In a case where the catalyst type curing agent is used in addition to the addition polymerization type curing agent as the first curing agent, as the ratio of the addition polymerization type curing agent to the first polyepoxide component, the equivalent ratio of reactive groups of the addition polymerization type curing agent to epoxy groups may be reduced by from about 10 to 50% than the above ratio of from 0.5 to 1.0, in a case where the catalyst type curing agent is used in the above ratio.

As the first curing agent, commercially available products may be used. As commercially available products of the first curing agent, specifically, the polyoxyalkylene triamine which is the addition polymerization curing agent may, for example, be JEFFAMINE T403 (tradename, manufactured by HUNTSMAN). Further, the triarylsulfonium salt which is a photocurable type catalyst type curing agent may, for example, be ADEKA OPTOMER SP-152 (tradename, manufactured by ADEKA CORPORATION).

### (Water-absorptive resin layer-forming composition)

The water-absorptive resin layer in the anti-fogging film of the anti-fogging article of the present invention is a water-absorptive resin layer composed mainly of the first cured epoxy resin obtained by reacting the water-absorptive resin layer-forming composition containing the first polyepoxide component and the first curing agent.

The first polyepoxide component and the first curing agent contained in the water-absorptive resin layer-forming composition are as described above including the preferred embodiments such as the compounds to be used, the ratio in the case of combination, and the like. The water-absorptive resin layer-forming composition usually contains a solvent in addition to the first polyepoxide component and the first curing agent. Further, as the case requires, it may contain a reactive additive or a nonreactive additive in addition to the above components.

Usually, the reaction of the first polyepoxide component and the first curing agent to obtain the water-absorptive resin composed mainly of the first cured epoxy resin is carried out after application of the water-absorptive resin layer-forming composition to the surface to be coated (on the resin underlayer), however, in a case where the composition contains a solvent, the above components may preliminarily be reacted to a certain extent in the composition before application to the surface to be coated, then the composition is applied to the surface to be coated and dried, followed by reaction. In a case where the first polyepoxide component and the first curing agent are preliminarily reacted to a certain extent in the solvent in the water-absorptive resin layer-forming composition as described above, the reaction temperature at the time of preliminary reaction is preferably at least 30°C, whereby the curing reaction will securely proceed.

The solvent to be used for the water-absorptive resin layer-forming composition is not particularly limited so long as it provides favorable solubility of the compounding ingredients including the first polyepoxide component, the first curing agent and other optional components, and is inert to such compounding ingredients, and specifically, it may, for example, be an alcohol, an acetate, an ether, a ketone or water.

In a case where a protic solvent is used as a solvent, depending upon the type of the first polyepoxide component, the solvent and the epoxy group are reacted, whereby the cured epoxy resin is hardly formed in some cases. Accordingly, in a case where a protic solvent is used, it is preferred to select a solvent which hardly reacts with the first polyepoxide component. A protic solvent which can be used may, for example, be ethanol or isopropanol. Further, another solvent is preferably acetone, methyl ethyl ketone, butyl acetate, propylene carbonate, diethylene glycol dimethyl ether, diacetone alcohol, propylene glycol monomethyl ether or the like.

Such solvents may be used alone or in combination of two or more. Further, the compounding ingredients such as the first polyepoxide component and the first curing agent may be prepared as a mixture with a solvent in some cases. In such a case, the solvent contained in the mixture may be used as it is as the solvent for the water-absorptive resin layer-forming composition, or the same or another solvent may further be added to the water-absorptive resin layer-forming composition.

Further, the amount of the solvent in the water-absorptive resin layer-forming composition is preferably from 100 to 500 parts by mass, more preferably from 200 to 350 parts by mass per 100 parts by mass of the total mass of all the solid content in the first polyepoxide component and the first curing agent, and various compounding ingredients optionally blended.

Here, with respect to the amounts of the first polyepoxide component and the first curing agent in the water-absorptive resin layer-forming composition, the amount of the first polyepoxide component is preferably from 15 to 30 mass% to the entire amount of the composition, and the amount of the first curing agent is preferably from 3 to 20 mass% to the entire amount of the composition. In a case where the addition polymerization type curing agent and the catalyst type curing agent are used as the first curing agent, their total amount is preferably from 3 to 16 mass% to the entire amount of the composition.

The blend ratio of the addition polymerization type curing agent and the catalyst type curing agent in the first curing agent depends on the type of the curing agents to be used. For example, in a case where as the first curing agent, an amine compound having active hydrogen (addition polymerization type curing agent) and an imidazole compound (catalyst type curing agent) are used in combination, it is preferred to use the amine compound having active hydrogen in a ratio of from 3 to 15 mass%, and the imidazole compound in a ratio of from 0.1 to 1.0 mass%, to the entire amount of the water-absorptive resin layer-forming composition. By such a blend ratio, advantages of both the addition polymerization type curing agent and the catalyst type curing agent are effectively obtained.

Among additives which the water-absorptive resin layer-forming composition optionally contains, the reactive additive may, for example, be a compound having one reactive group reactive with an epoxy group such an alkyl monoamine, or a coupling agent having an epoxy group or an amino group. In the water-absorptive resin layer-forming composition, the coupling agent is a component blended for the purpose of improving the adhesion between the water-absorptive resin layer and the resin underlayer, or the adhesion of the water-absorptive resin layer and the after-mentioned functional layer to be laminated thereon as the case requires, and is one of components preferably blended.

The coupling agent to be used is preferably an organic metal type coupling agent or a polyfunctional organic compound. The organic metal type coupling agent may, for example, be a silane type coupling agent (hereinafter referred to as a silane coupling agent), a titanium type coupling agent or an aluminum type coupling agent, and is preferably a silane coupling agent. Such a coupling agent preferably has a reactive group capable of reacting with the reactive group of the first polyepoxide component and the first curing agent, and the reactive group remaining on the surface of the after-mentioned resin underlayer. By having such a reactive group, the coupling agent can be used also for the purpose of adjusting physical properties of the water-absorptive resin layer, in addition to improving the adhesion between the layers. Here, the coupling agent is preferably a compound having at least one (preferably one or two) bond between a metal atom-carbon atom. The organic metal type coupling agent is particularly preferably a silane coupling agent.

The silane coupling agent is a compound having at least one hydrolyzable group and at least one monovalent organic group (provided that the terminal bonded to the silicon atom is a carbon atom) bonded to the silicon atom, wherein one of the monovalent organic group is a functional organic group (an organic group having a reactive group or an organic group having properties such as hydrophobicity). The organic group other than the functional organic group is preferably an alkyl group having at most 4 carbon atoms. The number of hydrolyzable groups bonded to the silicon atom is preferably 2 or 3. The silane coupling agent is preferably a compound represented by the following formula (1):

R³R⁴_{c}SiX²_{3-c} ...... (1)

In the above formula (1), R³ is a monovalent functional organic group, R⁴ is an alkyl group having at most 4 carbon atoms, and c is an integer of 0 or 1. R⁴ is preferably a methyl group or an ethyl group, particularly preferably a methyl group. X² is a hydrolyzable group such as a chlorine atom, an alkoxy group, an acyl group or an amino group, particularly preferably an alkoxy group having at most 4 carbon atoms.

The functional organic group may be an organic group having hydrophobicity such as a polyfluoroalkyl group or a C₆₋₂₂ long chain alkyl group. The functional organic group is preferably an alkenyl group having an addition-polymerizable unsaturated group or an alkyl group having a reactive group. The alkyl group having a reactive group may be an alkyl group substituted by an organic group having a reactive group. The number of carbon atoms in such an alkyl group is preferably from 1 to 4. The reactive group may, for example, be an epoxy group, an amino group, a mercapto group, an ureido group, a hydroxy group, a carboxy group, an acryloyloxy group, a methacryloyloxy group or an isocyanate group. Further, the organic group having such a reactive group may, for example, be a glycidyl group, an epoxycyclohexyl group, an alkylamino group, a dialkylamino group, an arylamino group or a N-aminoalkyl-substituted amino group. Among them, preferred is a silane coupling agent in which the reactive group is an epoxy group, an amino group, a mercapto group or a ureido group.

Such a silane coupling agent may, for example, be 2-(3,4-epoxycyclohexyl)ethyltrimethoxysilane, 3-glycidoxypropyltrimethoxysilane, 3-glycidoxypropyltriethoxysilane, 3-glycidoxypropylmethyldiethoxysilane, 3-methacryloxypropylmethyldimethoxysilane, 3-methacryloxypropyltrimethoxysilane, 3-acryloxypropyltrimethoxysilane, 3-isocyanatepropyltrimethoxysilane, N-(2-aminoethyl)-3-aminopropylmethyldimethoxysilane, N-(2-aminoethyl)-3-aminopropyltrimethoxysilane, 3-aminopropyltrimethoxysilane, 3-aminopropylmethyldimethoxysilane, N-phenyl-3-aminopropyltrimethoxysilane, 3-ureidopropyltriethoxysilane or 3-mercaptopropyltrimethoxysilane.

Among them, preferred is 3-aminopropyltrimethoxysilane, 3-aminopropylmethyldimethoxysilane, N-(2-aminoethyl)-3-aminopropylmethyldimethoxysilane, N-(2-aminoethyl)-3-aminopropyltrimethoxysilane, 3-glycidoxypropyltrimethoxysilane, 3-glycidoxypropyltriethoxysilane, 3-glycidoxypropylmethyldiethoxysilane, 3-methacryloxypropylmethyldimethoxysilane, 3-methacryloxypropyltrimethoxysilane or 3-acryloxypropyltrimethoxysilane.

In the present invention, among them, particularly preferred is a silane coupling agent having an amino group, such as 3-aminopropyltrimethoxysilane, 3-aminopropylmethyldimethoxysilane, N-(2-aminoethyl)-3-aminopropylmethyldimethoxysilane or N-(2-aminoethyl)-3-aminopropyltrimethoxysilane.

With respect to the amount of the coupling agent in the water-absorptive resin layer-forming composition, its lower limit is not determined since the coupling agent is not an essential component. However, in order to obtain sufficient effect by incorporating the coupling agent, the mass ratio of the coupling agent is preferably from 5 to 40 mass%, more preferably from 10 to 30 mass% to the total mass of the first polyepoxide component and the first curing agent in the water-absorptive resin layer-forming composition. The upper limit of the amount of the coupling agent is restricted by physical properties and the function of the coupling agent. In a case where the coupling agent is used for the purpose of improving the adhesion of the water-absorptive resin layer composed mainly of the first cured epoxy resin, the mass ratio of the coupling agent to the total mass of the first polyepoxide component and the first curing agent is preferably at most 40 mass%, more preferably at most 30 mass%. Coloring of the water-absorptive resin composed mainly of the first cured epoxy resin e.g. by oxidation when exposed to high temperature can be prevented when the amount of use of the coupling agent is not in excess.

Here, the amount of the coupling agent to the entire mass of the water-absorptive resin layer-forming composition is, in the case of using the silane coupling agent for example, preferably from 2 to 10 mass%, more preferably from 3 to 7 mass%.

Further, a particularly preferred composition of the water-absorptive resin layer-forming composition containing the silane coupling agent may be a composition comprising from 15 to 30 mass% of the first polyepoxide component, from 3 to 15 mass% of the amine compound having active hydrogen, from 0.1 to 1.0 mass% of the imidazole compound, from 2 to 10 mass% of the silane coupling agent and from 50 to 75 mass% of the solvent, to the entire amount of the composition.

Here, in a case where the water-absorptive resin layer-forming composition contains a coupling agent having an amino group as the coupling agent, the equivalent ratio of the amine's active hydrogens to the epoxy groups is adjusted to be within the above preferred range by calculating the equivalent ratio of the amine's active hydrogens of the first curing agent and the amine's active hydrogens of the coupling agent to the epoxy groups of the first polyepoxide component.

Likewise, in a case where the water-absorptive resin layer-forming composition contains a coupling agent having an epoxy group as the coupling agent, the equivalent ratio of the amine's active hydrogens to the epoxy groups is adjusted to be within the above preferred range by calculating the equivalent ratio of the amine's active hydrogens of the first curing agent to the epoxy groups of the first polyepoxide component and the epoxy group of the coupling agent.

The water-absorptive resin layer-forming composition preferably further contains a filler as an optional component. By containing the filler, it is possible to increase the mechanical strength and the heat resistance of the water-absorptive resin layer to be formed, and to lower the shrinkage on curing of the resin at the time of the curing reaction. Such a filler is preferably a filler made of a metal oxide. The metal oxide may, for example, be silica, alumina, titania or zirconia, and is preferably silica.

Further, in addition to the above filler, a filler made of ITO (indium tin oxide) may also be used. Since ITO has infrared absorption properties, it is possible to impart thermal absorption properties to the water-absorptive resin. Accordingly, when the filler made of ITO is used, an anti-fogging effect by thermal absorption can be expected in addition to the water absorption properties.

The filler contained in the water-absorptive resin layer-forming composition is preferably in the form of particles, and the average particle size is from 0.01 to 0.3 µm, preferably from 0.01 to 0.1 µm. Further, the amount of the filler is preferably from 0.5 to 5 mass%, more preferably from 1 to 3 mass% to the total mass of the first polyepoxide component and the first curing agent. When the amount of the filler is at least 0.5 mass%, a decrease in the effect to lower the shrinkage on curing of the water-absorptive resin composed mainly of the first cured epoxy resin is likely to be suppressed. Further, when the amount of the filler is at most 5 mass%, the space for water absorption can sufficiently be secured, and the anti-fogging performance tends to be high.

Silica preferably used as the filler, more preferably, silica fine particles, can be blended in the water-absorptive resin layer-forming composition as colloidal silica dispersed in water or an organic solvent such as methanol, ethanol, isobutanol, propylene glycol monomethyl ether or butyl acetate. The colloidal silica may be silica hydrosol dispersed in water or an organo silica sol in which water is replaced with an organic solvent, and in the case of incorporation in the water-absorptive resin layer-forming composition, it is preferred to use an organo silica sol in which the same organic solvent as the organic solvent preferably used for the composition is used as the dispersion medium.

As such an organo silica sol, commercially available products may be used. Commercially available products may, for example, be ORGANO SILICA SOL IPA-ST (tradename, manufactured by Nissan Chemical Industries, Ltd.) in which silica fine particles having a particle size of from 10 to 15 nm are dispersed in isopropanol in a SiO₂ content of 30 mass% to the entire amount of organo silica sol, and ORGANO SILICA SOL NBAC-ST (tradename, manufactured by Nissan Chemical Industries, Ltd.) in which silica fine particles having a particle size of from 10 to 15 nm are dispersed in butyl acetate in a SiO₂ content of 30 mass% to the entire amount of organo silica sol. In a case where colloidal silica is used as the silica fine particles, the amount of the solvent to be blended in the water-absorptive resin layer-forming composition is properly adjusted considering the amount of the solvent contained in the colloidal silica.

The water-absorptive resin layer-forming composition preferably further contains an antioxidant to increase the weather resistance of the obtainable water-absorptive resin layer as an optional component. If the second cured epoxy resin mainly constituting the water-absorptive resin layer is oxidized and denatured upon exposure to heat or light, the stress is likely to be accumulated in the water-absorptive resin layer, whereby the anti-fogging film will easily be peeled. By adding an antioxidant, such a phenomenon can be suppressed.

The antioxidant may, for example, be a phenol type antioxidant of a type to suppress oxidation of the resin by scavenging and decomposing peroxy radicals, a phosphorus type antioxidant of a type to suppress oxidation of the resin by decomposing a peroxide, or a sulfur type antioxidant, and in the present invention, a phenol type antioxidant is preferred.

As the phenol type antioxidant, the following phenol type antioxidant usually incorporated in a cured epoxy resin can be used without any particular restriction. Such a phenol type antioxidant may be used alone or in combination of two or more.

Pentaerythritol tetrakis[3-(3,5-di-tert-butyl-4-hydroxyphenyl)propionate], thiodiethylenebis[3-(3,5-di-tert-butyl-4-hydroxyphenyl)propionate], octadecyl-3-(3,5-di-tert-butyl-4-hydroxyphenyl)propionate, N,N'-hexane-1,6-diylbis[3-(3,5-di-tert-butyl-4-hydroxyphenyl)propionamide], 2,4-dimethyl-6-(1-methylpentadecyl)phenol, dimethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, calcium diethylbis[[[3,5-bis(1,1-dimethylethyl)-4-hydroxypheyl]methyl]phosphonate], 4,6-bis(octylthiomethyl)-o-cresol, ethylenebis(oxyethylene)bis[3-(5-di-tert-butyl-4-hydroxy-m-tolyl)propionate], hexamethylenebis[[3-(3,5-di-tert-butyl-4-hydroxyphenyl)propionate, 1,3,5-tris(3,5-di-tert-4-butyl-4-hydroxybenzyl)-1,3,5-triazine-2,4,6(1H,3H,5H)-trione, 1,3,5-tris(4-tert-butyl-3-hydroxy-2,6-xylyl)methyl]-1,3,5-triazine-2,4,6-(1H,3H,5H)-trione, a reaction product of N-phenylbenzeneamine and 2,4,4-trimethylpentene, 2,6-di-tert-butyl-4-(4,6-bis(octylthio)-1,3,5-triazin-2-ylamino)phenol, and the like.

Commercially available products of the phenol type antioxidant may, for example, be IRGANOX 1010, IRGANOX 1035, IRGANOX 1076 and IRGANOX 1135 (tradenames, manufactured by Ciba Japan), ADK STAB AO-30, ADK STAB AO-40, ADK STAB AO-50, ADK STAB AO-60, ADK STAB AO-70, ADK STAB AO-80 and ADK STAB AO-90 (tradenames, manufactured by ADEKA CORPORATION), Sumilizer GA-80, Sumilizer MDP-S, Sumilizer BBM-S, Sumilizer GM, Sumilizer GS(F) and Sumilizer GP (tradenames, manufactured by Sumitomo Chemical Co., Ltd.).

Further, the amount of the antioxidant blended in the water-absorptive resin layer-forming composition is preferably from 0.5 to 2 mass%, more preferably from 1 to 2 mass% to the total mass of the first polyepoxide component and the first curing agent.

To the water-absorptive resin layer-forming composition, as the case requires, a leveling agent, an antifoaming agent, a viscosity-adjusting agent, a light stabilizer or the like may be added.

The leveling agent may, for example, be a polydimethylsiloxane type surface modifier, an acrylic copolymer surface modifier or a fluorinated modified polymer type surface modifier, the antifoaming agent may, for example, be an organic type antifoaming agent such as a silicone type antifoaming agent, a surfactant, a polyether or a higher alcohol, the viscosity-adjusting agent may, for example, be an acrylic copolymer, a polycarboxylic acid amide or a modified urea compound, and the light stabilizer may, for example, be a hindered amine, or a nickel complex such as nickel bis(octylphenyl)sulfide, nickel complex-3,5-di-tert-butyl-4-hydroxybenzylphosphate monoethylate or nickel dibutyldithiocarbamate. Each of the respective components may be used in combination of two or more of the exemplified compounds. The content of each component in the water-absorptive resin layer-forming composition may be from 0.001 to 10 mass% to the total mass of the first polyepoxide component and the first curing agent.

### (Water-absorptive resin layer)

The water-absorptive resin layer in the anti-fogging article of the present invention is a resin layer composed mainly of the first cured epoxy resin having a three-dimensional network structure obtained by reacting the first polyepoxide component and the first curing agent contained in the water-absorptive resin layer-forming composition, having high water absorption property due to the characteristics of the above-described first cured epoxy resin and having durability such as the abrasion resistance and favorable outer appearance. The conditions for the above reaction will be described in the after-mentioned production process.

Further, the reactive additives such as the silane coupling agent to be optionally added are present in the water-absorptive resin layer as bonded to part of the three-dimensional network structure of the first cured epoxy resin, and further the nonreactive additives to be optionally added other than the reactive additives, are present in the water-absorptive resin layer as uniformly dispersed/included in the three-dimensional network structure of the first cured epoxy resin.

### [2-2] Resin underlayer

The resin underlayer constituting, together with the water-absorptive resin layer, the anti-fogging film to be formed on at least part of the surface of the substrate in the anti-fogging article of the present invention, is a layer formed between the substrate and the water-absorptive resin layer, and is a layer composed mainly of the second cured epoxy resin obtained by reacting a resin underlayer-forming composition containing a second polyepoxide component, a second curing agent and a tetraalkoxysilane and/or its oligomer, having water absorption property lower than that of the water-absorptive resin layer. Hereinafter, the resin composed mainly of the second cured epoxy resin in the resin underlayer will sometimes be referred to as a low water-absorptive resin.

Here, in this specification, as described for the above water-absorptive resin layer, the water absorption properties of the water-absorptive resin (highly water-absorptive resin) and the resin in the underlayer (low water-absorptive resin) are relative to each other, and "high water-absorptive" and "low water-absorptive" of these resins are not meant to indicate high/low water absorption property with a definite threshold,

To specifically indicate the water absorption property of the low water-absorptive resin constituting the resin underlayer formed in the anti-fogging article of the present invention, the saturated water absorption measured by the method as described for the above water-absorptive resin layer is preferably at most 20 mm/cm³, more preferably at most 10 mg/cm³. By the saturated water absorption of the low water-absorptive resin being at most 20 mg/cm³, as described above, the difference in the degree of expansion/shrinkage at the adhesive interface between the substrate and the anti-fogging film, practically between the substrate and the resin underlayer, tends to be small, whereby peeling of the anti-fogging film from the substrate can be prevented. As a result, an anti-fogging article excellent in the acid resistance and the alkali resistance will be obtained. On the other hand, with a view to reducing the difference in the degree of expansion/shrinkage between the resin underlayer and the water-absorptive resin layer in the anti-fogging film, the saturated water absorption of the low water-absorptive resin constituting the resin underlayer is preferably at least 1mg/cm³, more preferably at least 3 mg/cm³.

When the water absorption property of the resin underlayer provided in the anti-fogging article of the present invention is indicated by the water absorption anti-fogging property as described for the above water-absorptive resin layer as an index, the water absorption anti-fogging property is at most 10 seconds, more preferably at most 7 seconds, particularly preferably at most 3 seconds. With a view to reducing the difference in the degree of expansion/shrinkage between the resin underlayer and the water-absorptive resin layer in the anti-fogging film, in the same manner as the saturated water absorption, the water absorption anti-fogging property is preferably at least 1 second, more preferably at least 2 seconds.

From the relation between the saturated water absorption of the low water-absorptive resin constituting the resin underlayer and the water absorption anti-fogging property of the resin underlayer, the thickness of the resin underlayer of the anti-fogging article of the present invention is preferably at least 1 µm, more preferably at least 3 µm, particularly preferably at least 5 µm. When the thickness of the resin underlayer is at least 1 µm, peeling of the anti-fogging film from the substrate can be prevented, and as a result, an anti-fogging article excellent in the acid resistance and the alkali resistance will be obtained. Further, also from a reason such that the stress which occurs at the interface resulting from expansion/shrinkage of the water-absorptive resin layer is relaxed, the thickness of the resin underlayer is more preferably at least 3 µm, particularly preferably at least 5 µm. Further, the thickness of the resin underlayer is, with a view to reducing the material cost and improving the efficiency percentage, preferably at most 20 µm, more preferably at most 10 µm, particularly preferably at most 8 µm.

Here, since the peel resistance required for the resin underlayer in each anti-fogging article varies depending upon particular purpose of use, the thickness is properly set depending upon the performance required.

The cured epoxy resin mainly constituting the resin underlayer is a second cured epoxy resin obtained by reacting a second polyepoxide component and a second curing agent, and is the main component to make the resin underlayer have the above water absorption property.

As described above, usually, it is preferred to control the glass transition point of the cured epoxy resin to be low so as to increase the anti-fogging performance, and to control the glass transition point of the cured epoxy resin to be high so as to increase the durability. Considering these points, the glass transition point of the second cured epoxy resin mainly constituting the low water-absorptive resin is preferably from 40 to 150°C, more preferably from 40 to 120°C, although it depends on the type of the cured epoxy resin.

Both anti-fogging performance and durability are likely to be satisfied at high levels, when the glass transition point of the highly water-absorptive first cured epoxy resin mainly constituting the water-absorptive resin layer is within the above range (from -20 to 60°C, preferably from -5 to 40°C), and the glass transition point of the low water-absorptive second cured epoxy resin mainly constituting the resin underlayer is within the above range and is higher than the glass transition point of the first cured epoxy resin. The difference in the glass transition point between the second cured epoxy resin in the resin underlayer and the first cured epoxy resin in the water-absorptive resin is preferably at least 10°C, more preferably at least 20°C.

Now, the second cured epoxy resin mainly constituting the resin underlayer, obtained by reacting a second polyepoxide component and a second curing agent, will be described below.

### (Second polyepoxide component)

As the second polyepoxide component as the material component of the second cured epoxy resin, it is possible to use a polyepoxide properly selected from the glycidyl ether type polyepoxide, the glycidyl ester type polyepoxide, the glycidylamine type polyepoxide, the cyclic aliphatic polyepoxide and the like described for the above first polyepoxide component, commonly used as the material component for a cured epoxy resin. Of the polyepoxide used as the second polyepoxide component, the molecular weight is not particularly limited, however, a polyepoxide having a molecular weight at a level of from about 500 to about 1,000 is preferred, with a view to avoiding insufficient wettability of a coating fluid at the time of coating with a solution, and appearance failure such as irregularities of the coating film. Further, the number of epoxy groups per one molecule of the polyepoxide in the second polyepoxide component is not particularly limited so long as it is at least 2 on average, and is preferably from 2 to 10, more preferably from 2 to 8, further preferably from 2 to 4.

As the second polyepoxide component, for example, a polyepoxide having an aromatic nucleus, which is not selected as a preferred polyepoxide for the first polyepoxide component, may be selected, whereby the water absorption property of the obtainable cured epoxy resin can be made low.

The polyepoxide having an aromatic nucleus which can be used as the second polyepoxide component may be preferably a polyepoxide having a structure such that a phenolic hydroxy group is substituted by a glycidyloxy group. Specifically, it may, for example, be a bisphenol type diglycidyl ether such as bisphenol A diglycidyl ether, bisphenol F diglycidyl ether or bis(4-glycidyoxyphenyl), a phenol novolac type diglycidyl ether, a cresol novolac type diglycidyl ether or an aromatic polyglycidyl polycarboxylate such as diglycidyl phthalate. Among such polyepoxides having an aromatic nucleus, the second polyepoxide component is preferably bisphenol A diglycidyl ether or bisphenol F diglycidyl ether.

Further, it is considered that even with a polyepoxide having no aromatic nucleus, by increasing the number of crosslinked sites, the obtainable cured epoxy resin will have a dense three-dimensional network structure, and the space for water retention will be small, whereby the water absorption property tends to be low.

Accordingly, by properly selecting the type and the amount of the second curing agent, the polyepoxide having no aromatic nucleus exemplified for the first polyepoxide component may be used as the second polyepoxide component as it is, and the polyepoxide preferred as the first polyepoxide component may also be used as the second polyepoxide.

Further, particularly preferred as the polyepoxide for the second polyepoxide component is sorbitol polyglycidyl ether, pentaerythritol polyglycidyl ether, trimethylolpropane polyglycidyl ether and the like, which are classified into a glycidyl ether type polyepoxide derived from an aliphatic/alicyclic polyol.

With respect to the second polyepoxide component, in order that the number of the crosslinked sites in the obtainable second cured epoxy resin be large and the water absorption property be controlled to be low, for example, in a case where the second polyepoxide component is a glycidyl ether type polyepoxide derived from an aliphatic/alicyclic polyol, its epoxy equivalent is preferably from 100 to 2,000 g/eq, more preferably from 100 to 150 g/eq.

Further, as the polyepoxide constituting the second polyepoxide component also, commercially available products may be used in the same manner as the polyepoxide constituting the first polyepoxide component. As such commercially available products, in addition to the commercially available products described for the first polyepoxide component, the bisphenol A diglycidyl ether may be jER828 (tradename, manufactured Mitsubishi Chemical Corporation), and the bisphenol F diglycidyl ether may be ADEKA RESIN EP4901 (tradename, manufactured by ADEKA
CORPORATION).

### (Second curing agent)

The second cured epoxy resin mainly constituting the resin underlayer is a second cured epoxy resin obtained by reacting the second polyepoxide component and the second curing agent.

As the second curding agent, it is preferred to use an addition polymerization type curing agent in the same manner as the first curing agent. Further, it is also possible to use a catalyst type curing agent in combination with the addition polymerization type curing agent.

The type of the addition polymerization type curing agent which can be used is the same as the first curing agent. That is, the addition polymerization type curing agent is preferably an amino compound having at least two amino groups having active hydrogen, a compound having at least two carboxy groups or a compound having at least two thiol groups, more preferably the above amino compound having active hydrogen.

Here, by selecting as the second curing agent, an addition polymerization type curing agent having an aromatic nucleus which is not selected as the curing agent preferred as the first curing agent, the water absorption property of the obtainable cured epoxy resin can be made low. Although it depends on the degree of the water absorption property required for the resin underlayer, the water absorption property of the obtainable second cured epoxy resin can be made to be within the above desired range, by using a compound having an aromatic nucleus for at least one of the second polyepoxide component and the second curing agent.

Further, even in a case where the polyepoxide having no aromatic nucleus is used as the second polyepoxide component and the addition polymerization type curing agent having no aromatic nucleus is used as the second curing agent, the water absorption property of the obtainable second cured epoxy resin can be made to be within the above desired range, e.g. by combining them so that the number of crosslinked sites is large as described above. Further, the second cured epoxy resin having no aromatic nucleus obtainable in such a manner is excellent in the weather resistance as compared with a second cured epoxy resin having an aromatic nucleus.

As the addition polymerization type curing agent having no aromatic nucleus, the same curing agent as the addition polymerization type curing agent having no aromatic nucleus as described for the above first curing agent may be used. Further, the addition polymerization type curing agent having an aromatic nucleus may, for example, be a polyamine having an aromatic nucleus or an aromatic polycarboxylic acid anhydride. The polyamine having an aromatic nucleus may, for example, be specifically phenylenediamine, xylylenediamine or diaminodiphenylmethane, and the aromatic polycarboxylic acid anhydride may, for example, be phthalic anhydride, trimellitic anhydride or pyromellitic anhydride.

As the catalyst type curing agent which can be used as the case requires for the second curing agent, the same curing agent as the catalyst type curing agent as described for the above first curing agent may be used.

As the blend ratio of the second polyepoxide component and the second curing agent as the material components for the second cured epoxy resin to be used in the present invention, in a case where the addition polymerization type curing agent is used as the second curing agent, the equivalent ratio of reactive groups of the addition polymerization type curing agent to epoxy groups derived from the second polyepoxide component is preferably at a level of from 0.8 to 1.5, more preferably at a level of from 1.0 to 1.5. When the equivalent ratio of reactive groups of the addition polymerization type curing agent to epoxy groups is within the above range, it is possible to obtain the second cured epoxy resin having low water absorption property as compared with the first cured epoxy resin, having a dense three-dimensional network structure by crosslinking at sufficiently many crosslink sites at room temperature without increasing the reaction temperature to accelerate the addition polymerization reaction.

Further, in a case where an amino compound having active hydrogen which is an addition polymerization type curing agent is used as the second curing agent in the present invention, it is preferably used in such an amount that the equivalent ratio of amine's active hydrogens to epoxy groups derived from the second polyepoxide component is from 0.5 to 1.5, more preferably from 1.2 to 1.5. In the same manner as above, when the equivalent ratio of amine's active hydrogens to epoxy groups is within the above range, it is possible to obtain the second cured epoxy resin having low water absorption property as compared with the first cured epoxy resin, having a dense three-dimensional network structure by crosslinking at sufficiently many crosslink sites without increasing the reaction temperature to accelerate the addition polymerization reaction.

Further, physical properties of the obtainable cured epoxy resin may be insufficient if the mass ratio of the addition polymerization type curing agent used as the second curing agent to the second polyepoxide component is too high, and accordingly the ratio of the addition polymerization type curing agent to the second polyepoxide component is preferably at most 40 mass%.

### (Resin underlayer-forming composition)

The resin underlayer in the anti-fogging film of the anti-fogging article of the present invention is a resin underlayer composed mainly of the second cured epoxy resin obtained by reacting the resin underlayer-forming composition containing the second polyepoxide component and the second curing agent.

The second polyepoxide component and the second curing agent contained in the resin underlayer-forming composition are as described above including the preferred embodiments such as the compounds to be used, the ratio in the case of combination, and the like. The resin underlayer-forming composition usually contains a solvent in addition to the second polyepoxide component and the second curing agent. Further, as the case requires, it contains a reactive additive and a nonreactive additive in addition to the above components.

Here, in the resin underlayer-forming composition, in the same manner as the water-absorptive resin layer-forming composition, the second polyepoxide component and the second curing agent may preliminarily be reacted to a certain extent before the composition containing a solvent is applied to the surface to be coated, and then the composition is applied to the surface to be coated and dried, followed by reaction. The conditions for preliminary reaction may be the same as in the case of the water-absorptive resin layer-forming composition.

The solvent to be used for the resin underlayer-forming composition is not particularly limited so long as it provides favorable solubility of compounding ingredients including the second polyepoxide component, the second curing agent and other optional components, and it is inert to such compounding ingredients, and specifically, it may be the same solvent as the solvent for the water-absorptive resin layer-forming composition. The preferred embodiments of the solvent are also the same as for the water-absorptive resin layer-forming composition.

The amount of the solvent in the resin underlayer-forming composition is preferably from 200 to 950 parts by mass, more preferably from 400 to 950 parts by mass per 100 parts by mass of the total mass of all the solid content in the second polyepoxide component and the second curing agent, and other optionally blended compounding ingredients.

Here, with respect to the amounts of the second polyepoxide component and the second curing agent in the resin underlayer-forming composition, the amount of the second polyepoxide component is preferably from 4 to 10 mass% to the entire amount of the composition, and the amount of the second curing agent is preferably from 0.1 to 4.0 mass% to the entire amount of the composition. In a case where the addition polymerization type curing agent and the catalyst type curing agent are used as the second curing agent, their total amount is preferably from 0.1 to 4.0 mass% to the entire composition.

The reactive additives optionally contained in the resin underlayer-forming composition may be the same additives as the reactive additives optionally contained in the water-absorptive resin layer-forming composition. Among the reactive additives, the coupling agent is a component blended for the purpose of improving the adhesion between the resin underlayer and the substrate and the adhesion between the resin underlayer and the water-absorptive resin layer, and is one of components preferably blended, in the resin underlayer-forming composition.

The coupling agent optionally blended in the resin underlayer-forming composition is the same as the coupling agent used for the water-absorptive resin layer-forming composition including the compound to be used and the preferred embodiments.

Further, with respect to the amount of the coupling agent blended in the resin underlayer-forming composition, the mass ratio of the coupling agent is preferably from 5 to 50 mass%, more preferably from 10 to 40 mass%, to the total mass of the second polyepoxide component and the second curing agent.

The upper limit of the amount of the coupling agent is restricted depending upon the physical properties and the function of the coupling agent. In a case where the coupling agent is used for the purpose of improving the adhesion of the resin underlayer composed mainly of the second cured epoxy resin, the mass ratio of the coupling agent to the total mass of the second polyepoxide component and the second curing agent is preferably at most 50 mass%, more preferably at most 40 mass%.

On the other hand, in a case where physical properties such as the water absorption property of the resin underlayer composed mainly of the second cured epoxy resin are to be adjusted by the coupling agent or by the second curing agent and the coupling agent, the mass ratio of the coupling agent to the total mass of the second polyepoxide component and the second curing agent is preferably at most 40 mass%, more preferably at most 20 mass%. Coloring of the resin in the underlayer composed mainly of the second cured epoxy resin e.g. by oxidation upon exposure to high temperature can be prevented when the amount of use of the coupling agent is not in excess.

The amount of the coupling agent to the entire amount of the resin underlayer-forming composition is, in a case of using the silane coupling agent for example, preferably from 0.1 to 3.0 mass%, more preferably from 1 to 2 mass%.

Here, particularly preferred as the composition in the resin underlayer-forming composition containing the silane coupling agent may be a composition comprising from 4 to 10 mass% of the second polyepoxide component, from 0.1 to 4.0 mass% of the amine compound having active hydrogen, from 0.1 to 4.0 mass% of the silane coupling agent and from 70 to 95 mass% of a solvent, to the entire amount of the composition.

Further, in a case where the resin underlayer-forming composition contains a coupling agent having an amino group or a coupling agent having an epoxy group as the coupling agent, the equivalent ratio of amine's active hydrogens to the epoxy groups is calculated including such a coupling agent, and the amounts of the respective components are adjusted so that the equivalent ratio is within the above range.

The resin underlayer-forming composition contains a tetraalkoxysilane and/or its oligomer (i.e. its partial hydrolyzed condensate). By incorporating a tetraalkoxysilane and/or its oligomer (hereinafter referred to as a tetraalkoxysilane compound), the viscosity of the resin underlayer-forming composition will be lowered, and the crosslinking reaction of the second polyepoxide component and the second curing agent will be carried out uniformly. Further, the reaction sites of the substrate and the water-absorptive resin layer will be increased, whereby the adhesion will be improved. Thus, the weather resistance of the obtainable resin underlayer can be increased.

The tetraalkoxysilane may, for example, be tetramethoxysilane, tetraethoxysilane, tetra-n-propoxysilane or tetra-n-butoxysilane. Among them, tetramethoxysilane or tetraethoxysilane is preferred. They may be used alone or in combination of two. Further, the tetraalkoxysilane may be blended in the resin underlayer-forming composition as an oligomer obtained by partial hydrolytic (co)-condensation of from about 2 to about 3 molecules, or may be blended in the resin underlayer-forming composition as a mixture of the tetraalkoxysilane and its oligomer.

The amount of the tetraalkoxysilane and/or its oligomer blended in the resin underlayer-forming composition is preferably from 10 to 40 mass%, more preferably from 25 to 35 mass% to the total mass of the second polyepoxide component and the second curing agent.

The resin underlayer-forming composition preferably further contains, as an optional component, an antioxidant to increase the weather resistance of the obtainable resin underlayer, from the same reason as for the water-absorptive resin layer-forming composition.

The antioxidant optionally blended in the resin underlayer-forming composition may be the same as the antioxidant to be used for the water-absorptive resin layer-forming composition including the compound to be used and the preferred embodiments.

Further, the amount of the antioxidant blended in the resin underlayer-forming composition is preferably from 0.5 to 3 mass%, more preferably from 1 to 2 mass%, to the total mass of the second polyepoxide component and the second curing agent.

Further, to the resin underlayer-forming composition also, as the case requires, the same filler, leveling agent, antifoaming agent, viscosity-adjusting agent, light stabilizer and the like as those contained in the water-absorptive resin layer-forming composition may be added in the same amount.

### (Resin underlayer)

The resin underlayer in the anti-fogging article of the present invention is a resin layer composed mainly of the second cured epoxy resin having a three-dimensional network structure, obtained by reacting the second polyepoxide component and the second curing agent contained in the resin underlayer-forming composition, having water absorption property lower than that of the water-absorptive resin layer due to the characteristics of the above-described second cured epoxy resin and having sufficiently secured adhesion to the substrate and adhesion to the water-absorptive resin layer, and having excellent peel resistance. The conditions for the above reaction will be described in the after-mentioned production process.

Further, the reactive additives such as the silane coupling agent optionally added are present in the resin underlayer as bonded to part of the three-dimensional network structure of the second cured epoxy resin, and the nonreactive additives optionally added other than the reactive additives are present in the resin underlayer as uniformly dispersed/included in the three-dimensional network structure of the second cured epoxy resin.

### (Anti-fogging film)

The anti-fogging film in the anti-fogging article of the present invention has a structure having the resin underlayer and the water-absorptive resin layer laminated in this order from the substrate side. The anti-fogging film formed on the substrate with the above structure has excellent outer appearance in addition to excellent anti-fogging property, and durability such as abrasion resistance and peel resistance.

To specifically indicate the water absorption property of the anti-fogging film in the anti-fogging article of the present invention, the saturated water absorption measured by the method as described for the above water-absorptive resin layer is at least 200 mg/cm³, more preferably at least 300 mg/cm³.

Further, with respect to the water absorption property of the anti-fogging film in the anti-fogging article of the present invention, the water absorption anti-fogging property indicated by the anti-fogging time (seconds) until fogging is confirmed after the surface of the anti-fogging film of an anti-fogging article after being left to stand in an environment at 20°C under a relative humidity of 50% for 1 hour is held over a warm water bath at 40°C, is preferably at least 30 seconds, more preferably at least 50 seconds, particularly preferably at least 100 seconds. Since the anti-fogging performance required for each anti-fogging article varies depending upon particular purpose of use, the design may properly be set depending upon the performance required.

Here, soda lime glass without anti-fogging processing usually fogs up approximately in from 1 to 3 seconds in the above test.

Further, with respect to the peel resistance of the anti-fogging film in a weather resistance test, peeling, cracks and whitening will not occur in the following test. The anti-fogging film is formed on one side of a 2 mm-thick glass substrate, irradiated with light for 160 hours through the glass substrate from the non-film surface side without anti-fogging film of the glass substrate, using a sunshine carbon arc lamp weather resistance testing machine in accordance with JIS D0205 (WAL-1H), and further held in a constant temperature and constant humidity chamber at 85°C under 90%RH for 500 hours, and the surface of the anti-fogging film is washed with ethanol.

Further, the anti-fogging film in the anti-fogging article of the present invention may further have various functional films on the resin underlayer and the water-absorptive resin layer laminated from the substrate side, as the case requires, within a range not to impair the effects of the present invention. Such functional films may, for example, be specifically an anti-fouling layer which imparts staining resistance to the anti-fogging film, an ultraviolet shielding layer and an infrared absorbing layer.

### <Process for producing anti-fogging article>

The anti-fogging film of the anti-fogging article of the present invention has the resin underlayer and the water-absorptive resin layer laminated in this order from the substrate side. Such an anti-fogging film can be formed, specifically, by the following process (1) or (2).
(1) A process of applying the resin underlayer-forming composition to the surface of a substrate, followed by reaction to form the resin underlayer, and then applying the water-absorptive resin layer-forming composition to the surface of the resin underlayer, followed by reaction to form the water-absorptive resin layer thereby to obtain an anti-fogging film.
(2) A process such that when the water-absorptive resin layer-forming composition is reacted to obtain a water-absorptive resin, it is formed into a film i.e. a water-absorptive resin layer, and the substrate surface and the film (water-absorptive resin layer) are bonded by using the resin underlayer-forming composition as an adhesive to form the resin underlayer as an adhesive layer between them thereby to obtain an anti-fogging film having the resin underlayer and the water-absorptive resin layer laminated from the substrate surface side.

In the process (2), although it is possible to form a water-absorptive resin in the form of a film (water-absorptive resin layer) on a releasable support, remove the water-absorptive resin layer from the support and bond it to the substrate surface using the resin underlayer-forming composition as an adhesive, preferred is to bond the water-absorptive resin in the form of a film (water-absorptive resin layer) together with the support to the substrate surface using the resin underlayer-forming composition as an adhesive. The support to be used is not particularly limited so long as the effects of the present invention are not impaired, and a film of an acrylic resin such as polymethyl methacrylate is preferably used.

In the present invention, among such processes for producing an anti-fogging film, more preferred is the process (1), whereby a favorable outer appearance can be maintained when the resin underlayer and the water-absorptive resin layer are formed on the substrate surface with a large area, or at the time of industrial mass production.

Now, the process for producing an anti-fogging article of the present invention by the process (1) will be described below.

The process for producing an anti-fogging article of the present invention comprises (A) a step of applying the resin underlayer-forming composition containing the second polyepoxide component and the second curing agent to the surface of a substrate, followed by reaction to form the resin underlayer composed mainly of the second cured epoxy resin, and (B) a step of applying, to the surface of the resin underlayer, the water-absorptive resin layer-forming composition containing the first polyepoxide component consisting of the low molecular weight polyepoxide having a molecular weight of from 200 to 800 and the high molecular weight polyepoxide having a molecular weight of from 900 to 2,000 in a mass ratio of the low molecular weight polyepoxide:the high molecular weight polyepoxide of from 30:70 to 70:30, and the first curing agent, followed by reaction to form the water-absorptive resin layer composed mainly of the first cured epoxy resin.

Components which the resin underlayer-forming composition and the water-absorptive resin layer-forming composition respectively contain are as described above, and these components are respectively mixed by a conventional method to obtain the above two types of the compositions.

In the above step (A), the method of applying the resin underlayer-forming composition obtained as described above to the surface to be coated of the substrate to form the resin underlayer on the substrate is not particularly limited, and may be a known method such as a flow coating method, a dip coating method, a spin coating method, a spray coating method, a flexographic printing method, a screen printing method, a gravure printing method, a roll coating method, a meniscus coating method, a die coating method or a wiping method. The coating thickness of the resin underlayer-forming composition is such a thickness that the thickness of the resin underlayer finally obtainable by reaction of the reaction components in the composition is within the above range.

After the resin underlayer-forming composition is applied to the substrate, the solvent is removed by drying as a case requires, and a curing treatment is carried out under conditions in conformity with the reaction components to be used to obtain the resin underlayer composed mainly of the second cured epoxy resin. As conditions under which the solvent is removed by drying, specifically, conditions at from 50 to 90°C for from 5 to 15 minutes may be mentioned. Further, as the reaction conditions of the reaction components in the resin underlayer-forming composition i.e. the second polyepoxide component and the second curing agent, specifically, a heat treatment at from 70 to 150°C for from about 1 to about 60 minutes may be mentioned. Further, in a case where a UV-curable type photocurable resin is used, a treatment of UV irradiation at from 100 to 500 mJ/cm² for from 1 to 5 seconds by a UV curing apparatus or the like may be mentioned.

Here, in the production process of the present invention, the reaction of the resin underlayer-forming composition is preferably carried out under certain humidified conditions. By carrying out the reaction under humidified conditions, the reaction time can be shortened as compared with a case without humidification under the same temperature conditions. Further, in the same reaction time, by humidification, the reaction will sufficiently proceed even if the reaction temperature is set to be low. In either case, the reaction under humidified conditions is economically advantageous. Further, by carrying out the reaction under humidified condition, the reaction will uniformly proceed over the entire layer, and the dispersion of quality in the resin underlayer will be suppressed.

The humidified conditions may be specifically from 40 to 80%RH, more preferably from 50 to 80%RH. More preferred reaction conditions together with the temperature conditions may be reaction conditions under from 50 to 80%RH at from 70 to 100°C for from about 5 to about 30 minutes. More preferred conditions may be reaction conditions under from 50 to 80%RH at from 80 to 100°C for from about 10 to about 30 minutes.

The method of applying the water-absorptive resin layer-forming composition in the step (B) to the surface of the resin underlayer formed on a substrate in the step (A), may be the same as the method of applying the resin underlayer-forming composition. The coating thickness of the water-absorptive resin layer-forming composition is such a thickness that the thickness of the water-absorptive resin layer finally obtainable by reaction of the reaction composition in the composition is within the above range.

After the water-absorptive resin layer-forming composition is applied to the resin underlayer, the solvent is removed by drying as the case requires, and a curing treatment is carried out under conditions in conformity with the reaction components to be used, to obtain the water-absorptive resin layer composed mainly of the first cured epoxy resin. As the conditions under which the solvent is removed by drying, specifically, conditions at from 50 to 90°C for from 1 to 15 minutes may be mentioned. Further, as the reaction conditions of the reaction components in the water-absorptive resin layer-forming composition i.e. the first polyepoxide component and the first curing agent, specifically, a heat treatment at from 50 to 120°C for from about 10 to about 60 minutes may be mentioned. Further, in a case where a UV-curable type photocurable resin is used, a treatment of UV irradiation at from 50 to 1,000 mJ/cm² for from 5 to 10 seconds by a UV curing apparatus or the like may be mentioned.

Here, in the production process of the present invention, it is preferred to carry out the reaction of the water-absorptive resin layer-forming composition under certain humidified conditions in the same manner as the case of the resin underlayer-forming composition, from the above reasons. The humidified conditions may, specifically, be from 40 to 80%RH, more preferably from 50 to 80%RH. More preferred reaction conditions together with the temperature conditions may be reaction conditions under from 50 to 80%RH at from 70 to 100°C for from about 5 to about 30 minutes. More preferred conditions may be reaction conditions under from 50 to 80%RH at from 80 to 100°C for from about 10 to about 30 minutes.

By the above steps (A) and (B) in such a manner, the anti-fogging article of the present invention having an anti-fogging film formed on a substrate is obtained. The production process of the present invention preferably further comprises, after the step (B), (C) a step of dipping the obtained substrate provided with the resin underlayer and the water-absorptive resin layer in warm water. As dipping conditions, it is preferred to dip the substrate provided with the resin underlayer and the water-absorptive resin layer in warm water at from 40 to 90°C in an amount sufficient for the substrate for from about 1 to about 20 minutes, more preferably in warm water at from 50 to 70°C for from about 3 to about 5 minutes.

By such a warm water dipping treatment, excess reactive components remaining in the resin underlayer and the water-absorptive resin layer can be removed, and problems such as a decrease in the water absorption anti-fogging property resulting from remaining of these components, and problems such as whitening and surface irregularities resulting from bleeding out, can be overcome.

### EXAMPLES

Now, the present invention will be described in further detail with reference to Examples. However, the present invention is by no means restricted to such specific Examples. Examples 1 to 25 are Examples of the present invention, and Examples 26 to 28 are Comparative Examples.

Physical properties of polyepoxides used in Preparation Examples are summarized below. Denacol is a tradename of Nagase ChemteX Corporation.

### (1) Low molecular weight polyepoxide

### (1-1) Glycerin polyglycidyl ether

Denacol EX-313 (Mw: 383, average number of epoxy groups: 2.0 groups/molecule)

Denacol EX-314 (Mw: 454, average number of epoxy groups: 2.3 groups/molecule)

### (1-2) Polyglycerin polyglycidyl ether

Denacol EX-512 (Mw: 630, average number of epoxy groups: 4.1 groups/molecule)

### (2) High molecular weight polyepoxide

### (2-1) Aliphatic polyglycidyl ether

Denacol EX-1410 (Mw: 988, average number of epoxy groups: 3.5 groups/molecule)

Denacol EX-1610 (Mw: 1130, average number of epoxy groups: 4.5 groups/molecule)

Denacol EX-610U (Mw: 1408, average number of epoxy groups: 4.5 groups/molecule)

### (2-2) Polyglycerin polyglycidyl ether

Denacol EX-521 (Mw: 1294, average number of epoxy groups: 6.3 groups/molecule)

### (3) Polyepoxide used as a second polyepoxide component

### (3-1) Sorbitol polyglycidyl ether

Denacol EX622 (Mw: 930, average number of epoxy groups: 4.9 groups/molecule)

### (3-2) Bisphenol A diglycidyl ether

jER828 (tradename, manufactured by Mitsubishi Chemical Corporation, Mw: 340, average number of epoxy groups: about 2 groups/molecule)

### (3-3) Bisphenol F diglycidyl ether

ADEKA RESIN EP4901 (tradename, manufactured by ADEKA CORPORATION, Mw: 320, average number of epoxy groups: about 2 groups/molecule)

Anti-fogging articles in Examples were evaluated as follows.

### [Measurement of film thickness]

A cross-sectional image of the anti-fogging article was photographed by a scanning electron microscope (S4300 manufactured by Hitachi, Ltd.), and the film thicknesses of the resin underlayer and the water-absorptive resin layer were measured.

### [Evaluation of water absorption anti-fogging property]

The anti-fogging time (seconds) until fogging was confirmed when the anti-fogging film surface of the anti-fogging article after being left to stand in an environment at 20°C under a relative humidity of 50% for 1 hour, was held over a warm water bath at 40°C, was measured. Conventional soda lime glass without anti-fogging processing fogged up in from 1 to 2 seconds. The desired anti-fogging performance varies depending upon particular purpose of use. In this Example, the water absorption anti-fogging property for 30 seconds or longer is required in practice, and it is preferably at least 50 seconds, more preferably at least 100 seconds.

### [Evaluation of outer appearance]

The outer appearance of the anti-fogging film was evaluated based on the following evaluation standards.
○: None of defects in outer appearance of insufficient wettability of the coating fluid, irregularities of the coating film and wrinkles of the coating film was observed.
× : At least one of defects in outer appearance of insufficient wettability of the coating fluid, irregularities of the coating film and wrinkles on the coating film was observed.

### [Evaluation of peel resistance]

### (1) Vapor exposure

The surface of the anti-fogging film was held over a warm water bath at 90°C for a certain time and the film surface was washed with ethanol, followed by evaluation based on the following evaluation standards.
⊚: No change in outer appearance of the film was observed after exposure for 1,000 hours.
○: No change in outer appearance of the film was observed after exposure for 100 hours.
× : A change in outer appearance such as peeling, cracks or whitening of the film was observed after exposure for 100 hours.

### (2) Weather resistance

An anti-fogging article (single plate glass: 2 mm thickness) was irradiated with light for 160 hours from the non-film surface side by using a sunshine carbon arc lamp weather resistance testing machine (manufactured by Suga Test Instruments Co., Ltd.) in accordance with JIS D0205 (WAL-1H) and held in a constant temperature and constant humidity chamber set at 85°C under 90%RH for 500 hours, and the film surface was washed with ethanol, followed by evaluation based on the following evaluation standards.

An article for a transport vehicle (laminated glass: 2 mm thickness single plate glass/PVB film/2 mm thickness single plate glass) was tested and evaluated in the same manner except that the exposure time in the weather resistance testing machine was prolonged to 2,000 hours.
⊚: No change in outer appearance of the film was observed after the article was held in the constant temperature and constant humidity chamber for 500 hours.
○: No change in outer appearance of the film was observed after the article was held in the constant temperature and constant humidity chamber for 30 hours.
×: A change in outer appearance such as peeling, cracks or whitening of the film was observed after the article was held in the constant temperature and constant humidity chamber for 30 hours.

### (3) Acid resistance

0.3 mL of acetic acid (manufactured by Junsei Chemical Co., Ltd.) was dropped on the surface of the anti-fogging film, and the film was left to stand in a 50°C constant temperature chamber for 1 hour, and the film surface was washed with ethanol, followed by evaluation based on the following evaluation standards.
○: No change in outer appearance of the film was observed.
×: A change in outer appearance of the film such as film peeling, cracks or whitening was observed.

### [Evaluation of abrasion resistance]

Carried out in accordance with JIS R3212 (vehicle interior side). By a 5130 type abrasion testing machine manufactured by Taber, an abrasive wheel CS-10F was used. The abrasive wheel was brought into contact with the anti-fogging film surface of the anti-fogging article and rotated 100 rotations under a load of 4.90N, and the change in haze ΔH (%) was measured, followed by evaluation based on the following evaluation standards.
○: ΔH was 5% or lower.
×: At least one of ΔH higher than 5% and partial peeling of the anti-fogging film was observed.

### <1> Preparation of resin underlayer-forming composition

### [Preparation Example A-1 for reference only]

Into a glass container equipped with a stirrer and a thermometer, diacetone alcohol (8.07 g, manufactured by Junsei Chemical Co., Ltd.), bisphenol A diglycidyl ether (5.00 g, jER828, manufactured by Mitsubishi Chemical Corporation), polyoxyalkylene triamine (2.06 g, JEFFAMINE T403, manufactured by HUNTSMAN) and aminosilane (1.01 g, KBM903, manufactured by Shin-Etsu Chemical Co., Ltd.) were put and stirred at 25°C for 30 minutes. Then, the mixture was diluted 7-fold with diacetone alcohol (manufactured by Junsei Chemical Co., Ltd.) to obtain resin underlayer-forming composition (A-1).

### [Preparation Example A-2 for reference only]

Resin underlayer-forming composition (A-2) was obtained in the same manner in Preparation Example (A-1) except that the dilution rate with diacetone alcohol was 6-fold.

### [Preparation Example A-3 for reference only]

Resin underlayer-forming composition (A-3) was obtained in the same manner in Preparation Example (A-1) except that the dilution rate with diacetone alcohol was 5-fold.

### [Preparation Example A-4 for reference only]

Into a glass container equipped with a stirrer and a thermometer, diacetone alcohol (7.12 g, manufactured by Junsei Chemical Co., Ltd.), bisphenol A diglycidyl ether (5.00 g, jER828, manufactured by Mitsubishi Chemical Corporation), polyoxyalkylene triamine (1.64 g, JEFFAMINE T403, manufactured by HUNTSMAN) and aminosilane (0.47 g, KBM903, manufactured by Shin-Etsu Chemical Co., Ltd.) were put and stirred at 25°C for 30 minutes. Then, the mixture was diluted 6-fold with diacetone alcohol (manufactured by Junsei Chemical Co., Ltd.) to obtain resin underlayer-forming composition (A-4).

### [Preparation Example A-5 for reference only]

Into a glass container equipped with a stirrer and a thermometer, diacetone alcohol (6.74 g, manufactured by Junsei Chemical Co., Ltd.), bisphenol A diglycidyl ether (5.00 g, jER828, manufactured by Mitsubishi Chemical Corporation), polyoxyalkylene triamine (1.03 g, JEFFAMINE T403, manufactured by HUNTSMAN) and aminosilane (0.71 g, KBM903, manufactured by Shin-Etsu Chemical Co., Ltd.) were put and stirred at 25°C for 30 minutes. Then, the mixture was diluted 6-fold with diacetone alcohol (manufactured by Junsei Chemical Co., Ltd.) to obtain resin underlayer-forming composition (A-5).

### [Preparation Example A-6 for reference only]

Into a glass container equipped with a stirrer and a thermometer, diacetone alcohol (6.09 g, manufactured by Junsei Chemical Co., Ltd.), bisphenol A diglycidyl ether (5.00 g, jER828, manufactured by Mitsubishi Chemical Corporation), polyoxyalkylene triamine (0.62 g, JEFFAMINE T403, manufactured by HUNTSMAN) and aminosilane (0.47 g, KBM903, manufactured by Shin-Etsu Chemical Co., Ltd.) were put and stirred at 25°C for 30 minutes. Then, the mixture was diluted 6-fold with diacetone alcohol (manufactured by Junsei Chemical Co., Ltd.) to obtain resin underlayer-forming composition (A-6).

### [Preparation Example A-7 for reference only]

Into a glass container equipped with a stirrer and a thermometer, diacetone alcohol (9.34 g, manufactured by Junsei Chemical Co., Ltd.), bisphenol A diglycidyl ether (5.00 g, jER828, manufactured by Mitsubishi Chemical Corporation), polyoxyalkylene triamine (3.34 g, JEFFAMINE T403, manufactured by HUNTSMAN) and epoxysilane (1.00 g, KBM403, manufactured by Shin-Etsu Chemical Co., Ltd.) were put and stirred at 25°C for 30 minutes. Then, the mixture was diluted 6-fold with diacetone alcohol (manufactured by Junsei Chemical Co., Ltd.) to obtain resin underlayer-forming composition (A-7).

### [Preparation Example A-8 for reference only]

Into a glass container equipped with a stirrer and a thermometer, diacetone alcohol (7.11 g, manufactured by Junsei Chemical Co., Ltd.), sorbitol polyglycidyl ether (5.00 g, Denacol EX622, manufactured by Nagase ChemteX Corporation), polyoxyalkylene triamine (1.64 g, JEFFAMINE T403, manufactured by HUNTSMAN) and aminosilane (0.47 g, KBM903, manufactured by Shin-Etsu Chemical Co., Ltd.) were put and stirred at 25°C for 30 minutes. Then, the mixture was diluted 5-fold with diacetone alcohol (manufactured by Junsei Chemical Co., Ltd.) to obtain resin underlayer-forming composition (A-8).

### [Preparation Example A-9]

Into a glass container equipped with a stirrer and a thermometer, diacetone alcohol (7.59 g, manufactured by Junsei Chemical Co., Ltd.), bisphenol A diglycidyl ether (5.00 g, jER828, manufactured by Mitsubishi Chemical Corporation), polyoxyalkylene triamine (2.06 g, JEFFAMINE T403, manufactured by HUNTSMAN), aminosilane (1.01 g, KBM903, manufactured by Shin-Etsu Chemical Co., Ltd.) and tetraalkoxysilane (2.27 g, methyl orthosilicate, manufactured by TAMA CHEMICALS CO., LTD.) were put and stirred at 25°C for 30 minutes. Then, the mixture was diluted 5-fold with diacetone alcohol (manufactured by Junsei Chemical Co., Ltd.) to obtain resin underlayer-forming composition (A-9).

### [Preparation Example A-10]

Into a glass container equipped with a stirrer and a thermometer, diacetone alcohol (6.73 g, manufactured by Junsei Chemical Co., Ltd.), sorbitol polyglycidyl ether (5.00 g, Denacol EX622, manufactured by Nagase ChemteX Corporation), polyoxyalkylene triamine (1.23 g, JEFFAMINE T403, manufactured by HUNTSMAN), aminosilane (0.47 g, KBM903, manufactured by Shin-Etsu Chemical Co., Ltd.) and tetraalkoxysilane (1.88 g, methyl orthosilicate, manufactured by TAMA CHEMICALS CO., LTD.) were put and stirred at 25°C for 30 minutes. Then, the mixture was diluted 5-fold with diacetone alcohol (manufactured by Junsei Chemical Co., Ltd.) to obtain resin underlayer-forming composition (A-10).

### [Preparation Example A-11]

Into a glass container equipped with a stirrer and a thermometer, diacetone alcohol (7.93 g, manufactured by Junsei Chemical Co., Ltd.), bisphenol F diglycidyl ether (5.00 g, ADEKA RESIN EP4901, manufactured by ADEKA CORPORATION), polyoxyalkylene triamine (2.30 g, JEFFAMINE T403, manufactured by HUNTSMAN), aminosilane (1.13 g, KBM903, manufactured by Shin-Etsu Chemical Co., Ltd.) and tetraalkoxysilane (2.37 g, methyl orthosilicate, manufactured by TAMA CHEMICALS CO., LTD.) were put and stirred at 25°C for 30 minutes. Then, the mixture was diluted 5-fold with diacetone alcohol (manufactured by Junsei Chemical Co., Ltd.) to obtain resin underlayer-forming composition (A-11).

### [Preparation Example A-12 for reference only]

Into a glass container equipped with a stirrer and a thermometer, diacetone alcohol (8.07 g, manufactured by Junsei Chemical Co., Ltd.), bisphenol A diglycidyl ether (5.00 g, jER828, manufactured by Mitsubishi Chemical Corporation), polyoxyalkylene triamine (2.06 g, JEFFAMINE T403, manufactured by HUNTSMAN), aminosilane (1.01 g, KBM903, manufactured by Shin-Etsu Chemical Co., Ltd.) and an antioxidant (0.08 g, ADK STAB AO-50, manufactured by ADEKA CORPORATION) were put and stirred at 25°C for 30 minutes. Then, the mixture was diluted 5-fold with diacetone alcohol (manufactured by Junsei Chemical Co., Ltd.) to obtain resin underlayer-forming composition (A-12).

Of the above obtained resin underlayer-forming compositions A-1 to A-12, the composition and the ratio of amine's active hydrogens to epoxy groups are shown in Table 1. In Table 1, the amounts of the second polyepoxide component and the second curing agent (amine compound) represent the amounts (mass%) of the respective components to the entire amount of the resin underlayer-forming composition, and the amounts of the silane coupling agent and the additive represent the mass percentages (%) to the total mass of the second polyepoxide component and the second curing agent (amine compound) contained in the resin underlayer-forming composition.

**[Table 1]**

| Composition No. | Amine's active hydrogens/ epoxy groups | Second polyepoxide component (X') | | Second curing agent: amine compound (Y') | Silane coupling agent | | additive | |
|---|---|---|---|---|---|---|---|---|
| | | Type | Amount (wt%; based on composition) | Amount (wt%; based on composition) | Type | Amount (wt%: based on (X')+(Y')) | Type | Amount (wt%; based on (X')+(Y')) |
| A-1 | 1.43 | jER828 | 4.4% | 1.8% | KBM903 | 14.5% | - | - |
| A-2 | 1.43 | jER828 | 5.2% | 2.1% | KBM903 | 13.7% | - | - |
| A-3 | 1.43 | jER828 | 6.2% | 2.5% | KBM903 | 14.9% | - | - |
| A-4 | 1.00 | jER828 | 5.9% | 1.9% | KBM903 | 7.7% | - | - |
| A-5 | 0.80 | jER828 | 6.2% | 1.3% | KBM903 | 12.0% | - | - |
| A-6 | 0.50 | jER828 | 6.8% | 0.8% | KBM903 | 7.9% | - | - |
| A-7 | 1.40 | jER828 | 4.5% | 3.0% | KBM403 | 12.0% | - | - |
| A-8 | 1.43 | EX622 | 7.0% | 2.3% | KBM903 | 7.5% | - | - |
| A-9 | 1.43 | jER828 | 5.6% | 2.3% | KBM903 | 26.6% | TMOS | 32.2% |
| A-10 | 1.43 | EX622 | 6.5% | 1.6% | KBM903 | 19.8% | TMOS | 30.2% |
| A-11 | 1.43 | EP4901 | 4.4% | 2.0% | KBM903 | 28.1% | TMOS | 32.5% |
| A-12 | 1.43 | jER828 | 6.8% | 0.8% | KBM903 | 7.9% | AO-50 | 1.1% |

*1: "EX" of polyepoxide represents "Denacol EX".
*2: "EP4901" of polyepoxide represents "ADEKA RESIN EP4901".
*3: "TMOS" of additive represents "tetramethoxysilane".
*4: "AO-50" of additive represents "ADK STAB AO-50".

### <2> Preparation of water-absorptive resin layer-forming composition

### [Preparation Example B-1]

Into a glass container equipped with a stirrer and a thermometer, ethanol (9.94 g, manufactured by Junsei Chemical Co., Ltd.), methyl ethyl ketone (0.77 g, manufactured by Junsei Chemical Co., Ltd.), aliphatic polyglycidyl ether (3.40 g, Denacol EX-1610, manufactured by Nagase ChemteX Corporation), glycerin polyglycidyl ether (2.83 g, Denacol EX-313, manufactured by Nagase ChemteX Corporation), organo silica sol (0.41 g, NBAC-ST, manufactured by Nissan Chemical Industries, Ltd, SiO₂ content: 30 mass%), 2-methylimidazole (0.15 g, manufactured by Shikoku Chemicals Corporation) and polyoxyalkylene triamine (1.23 g, JEFFAMINE T403, manufactured by HUNTSMAN) were added with stirring, followed by stirring at 25°C for 1 hour. Then, aminosilane (1.27 g, KBM903, manufactured by Shin-Etsu Chemical Co., Ltd.) was added with stirring, followed by stirring at 25°C for 3 hours. Further, methyl ethyl ketone (10.00 g, manufactured by Junsei Chemical Co., Ltd.) and a leveling agent (0.02 g, BYK307, manufactured by BYK Japan K.K.) were added with stirring, to obtain water-absorptive resin layer-forming composition (B-1).

### [Preparation Example B-2]

Into a glass container equipped with a stirrer and a thermometer, ethanol (27.77 g, manufactured by Junsei Chemical Co., Ltd.), methyl ethyl ketone (9.32 g, manufactured by Junsei Chemical Co., Ltd.), aliphatic polyglycidyl ether (11.77 g, Denacol EX-1610, manufactured by Nagase ChemteX Corporation), glycerin polyglycidyl ether (9.78 g, Denacol EX-313, manufactured by Nagase ChemteX Corporation), organo silica sol (1.42 g, NBAC-ST, manufactured by Nissan Chemical Industries, Ltd, SiO₂ content: 30 mass%), 2-methylimidazole (0.50 g, manufactured by Shikoku Chemicals Corporation) and polyoxyalkylene triamine (4.27 g, JEFFAMINE T403, manufactured by HUNTSMAN) were added with stirring, followed by stirring at 25°C for 1 hour. Then, aminosilane (4.40 g, KBM903, manufactured by Shin-Etsu Chemical Co., Ltd.) was added with stirring, followed by stirring at 25°C for 3 hours. Further, methyl ethyl ketone (20.77 g, manufactured by Junsei Chemical Co., Ltd.) and a leveling agent (0.05 g, BYK307, manufactured by BYK Japan K.K.) were added with stirring, to obtain water-absorptive resin layer-forming composition (B-2).

### [Preparation Example B-3]

Into a glass container equipped with a stirrer and a thermometer, ethanol (8.46 g, manufactured by Junsei Chemical Co., Ltd.), methyl ethyl ketone (5.83 g, manufactured by Junsei Chemical Co., Ltd.), aliphatic polyglycidyl ether (4.53 g, Denacol EX-1610, manufactured by Nagase ChemteX Corporation), glycerin polyglycidyl ether (3.77 g, Denacol EX-313, manufactured by Nagase ChemteX Corporation), organo silica sol (0.55 g, NBAC-ST, manufactured by Nissan Chemical Industries, Ltd, SiO₂ content: 30 mass%), 2-methylimidazole (0.19 g, manufactured by Shikoku Chemicals Corporation) and polyoxyalkylene triamine (1.65 g, JEFFAMINE T403, manufactured by HUNTSMAN) were added with stirring, followed by stirring at 25°C for 1 hour. Then, aminosilane (1.69 g, KBM903, manufactured by Shin-Etsu Chemical Co., Ltd.) was added with stirring, followed by stirring at 25°C for 3 hours. Further, methyl ethyl ketone (3.33 g, manufactured by Junsei Chemical Co., Ltd.) and a leveling agent (0.02 g, BYK307, manufactured by BYK Japan K.K.) were added with stirring, to obtain water-absorptive resin layer-forming composition (B-3).

### [Preparation Example B-4]

Into a glass container equipped with a stirrer and a thermometer, ethanol (9.27 g, manufactured by Junsei Chemical Co., Ltd.), methyl ethyl ketone (1.98 g, manufactured by Junsei Chemical Co., Ltd.), aliphatic polyglycidyl ether (3.57 g, Denacol EX-1610, manufactured by Nagase ChemteX Corporation), glycerin polyglycidyl ether (2.97 g, Denacol EX-313, manufactured by Nagase ChemteX Corporation), organo silica sol (0.43 g, NBAC-ST, manufactured by Nissan Chemical Industries, Ltd, SiO₂ content: 30 mass%), 2-methylimidazole (0.15 g, manufactured by Shikoku Chemicals Corporation) and polyoxyalkylene triamine (1.66 g, JEFFAMINE T403, manufactured by HUNTSMAN) were added with stirring, followed by stirring at 25°C for 1 hour. Then, aminosilane (1.91 g, KBM903, manufactured by Shin-Etsu Chemical Co., Ltd.) was added with stirring, followed by stirring at 25°C for 3 hours. Further, methyl ethyl ketone (8.07 g, manufactured by Junsei Chemical Co., Ltd.) and a leveling agent (0.02 g, BYK307, manufactured by BYK Japan K.K.) were added with stirring, to obtain water-absorptive resin layer-forming composition (B-4).

### [Preparation Example B-5]

Into a glass container equipped with a stirrer and a thermometer, ethanol (9.24 g, manufactured by Junsei Chemical Co., Ltd.), methyl ethyl ketone (4.38 g, manufactured by Junsei Chemical Co., Ltd.), aliphatic polyglycidyl ether (4.32 g, Denacol EX-1610, manufactured by Nagase ChemteX Corporation), glycerin polyglycidyl ether (3.59 g, Denacol EX-313, manufactured by Nagase ChemteX Corporation), organo silica sol (0.52 g, NBAC-ST, manufactured by Nissan Chemical Industries, Ltd, SiO₂ content: 30 mass%), 2-methylimidazole (0.19 g, manufactured by Shikoku Chemicals Corporation) and polyoxyalkylene triamine (1.21 g, JEFFAMINE T403, manufactured by HUNTSMAN) were added with stirring, followed by stirring at 25°C for 1 hour. Then, aminosilane (0.92 g, KBM903, manufactured by Shin-Etsu Chemical Co., Ltd.) was added with stirring, followed by stirring at 25°C for 3 hours. Further, methyl ethyl ketone (5.63 g, manufactured by Junsei Chemical Co., Ltd.) and a leveling agent (0.02 g, BYK307, manufactured by BYK Japan K.K.) were added with stirring, to obtain water-absorptive resin layer-forming composition (B-5).

### [Preparation Example B-6]

Into a glass container equipped with a stirrer and a thermometer, ethanol (9.28 g, manufactured by Junsei Chemical Co., Ltd.), methyl ethyl ketone (1.07 g, manufactured by Junsei Chemical Co., Ltd.), aliphatic polyglycidyl ether (3.29 g, Denacol EX-1610, manufactured by Nagase ChemteX Corporation), glycerin polyglycidyl ether (2.73 g, Denacol EX-313, manufactured by Nagase ChemteX Corporation), organo silica sol (0.40 g, NBAC-ST, manufactured by Nissan Chemical Industries, Ltd, SiO₂ content: 30 mass%), 2-methylimidazole (0.14 g, manufactured by Shikoku Chemicals Corporation) and polyoxyalkylene triamine (3.06 g, JEFFAMINE T403, manufactured by HUNTSMAN) were added with stirring, followed by stirring at 25°C for 1 hour. Then, aminosilane (1.05 g, KBM903, manufactured by Shin-Etsu Chemical Co., Ltd.) was added with stirring, followed by stirring at 25°C for 3 hours. Further, methyl ethyl ketone (8.99 g, manufactured by Junsei Chemical Co., Ltd.) and a leveling agent (0.02 g, BYK307, manufactured by BYK Japan K.K.) were added with stirring, to obtain water-absorptive resin layer-forming composition (B-6).

### [Preparation Example B-7]

Into a glass container equipped with a stirrer and a thermometer, ethanol (9.28 g, manufactured by Junsei Chemical Co., Ltd.), methyl ethyl ketone (1.54 g, manufactured by Junsei Chemical Co., Ltd.), aliphatic polyglycidyl ether (3.43 g, Denacol EX-1610, manufactured by Nagase ChemteX Corporation), glycerin polyglycidyl ether (2.85 g, Denacol EX-313, manufactured by Nagase ChemteX Corporation), organo silica sol (0.41 g, NBAC-ST, manufactured by Nissan Chemical Industries, Ltd, SiO₂ content: 30 mass%), 2-methylimidazole (0.15 g, manufactured by Shikoku Chemicals Corporation), polyoxyalkylene triamine (2.54 g, JEFFAMINE T403, manufactured by HUNTSMAN) and epoxysilane (1.29 g, KBM403, manufactured by Shin-Etsu Chemical Co., Ltd.) were added with stirring, followed by stirring at 25°C for 4 hours. Then, methyl ethyl ketone (8.51 g, manufactured by Junsei Chemical Co., Ltd.) and a leveling agent (0.02 g, BYK307, manufactured by BYK Japan K.K.) were added with stirring, to obtain water-absorptive resin layer-forming composition (B-7).

### [Preparation Example B-8]

Water-absorptive resin layer-forming composition (B-8) was obtained in the same manner as in Preparation Example (B-2) except that methyl ethyl ketone was all replaced with acetone.

### [Preparation Example B-9]

Into a glass container equipped with a stirrer and a thermometer, ethanol (27.77 g, manufactured by Junsei Chemical Co., Ltd.), methyl ethyl ketone (9.32 g, manufactured by Junsei Chemical Co., Ltd.), aliphatic polyglycidyl ether (11.77 g, Denacol EX-1610, manufactured by Nagase ChemteX Corporation), glycerin polyglycidyl ether (9.78 g, Denacol EX-313, manufactured by Nagase ChemteX Corporation), organo silica sol (1.42 g, NBAC-ST, manufactured by Nissan Chemical Industries, Ltd, SiO₂ content: 30 mass%), 2-methylimidazole (0.50 g, manufactured by Shikoku Chemicals Corporation) and polyoxyalkylene triamine (4.27 g, JEFFAMINE T403, manufactured by HUNTSMAN) were added with stirring, followed by stirring at 25°C for 1 hour. Then, aminosilane (4.40 g, KBM903, manufactured by Shin-Etsu Chemical Co., Ltd.) was added with stirring, followed by stirring at 25°C for 3 hours. Further, acetone (20.77 g, manufactured by Junsei Chemical Co., Ltd.) and a leveling agent (0.05 g, BYK307, manufactured by BYK Japan K.K.) were added with stirring, to obtain water-absorptive resin layer-forming composition (B-9).

### [Preparation Example B-10]

An antioxidant (0.31 g, ADK STAB AO-50, manufactured by ADEKA CORPORATION) was added with stirring to water-absorptive resin layer-forming composition (B-2) to obtain water-absorptive resin layer-forming composition (B-10).

### [Preparation Example B-11]

Into a glass container equipped with a stirrer and a thermometer, ethanol (27.76 g, manufactured by Junsei Chemical Co., Ltd.), methyl ethyl ketone (10.04 g, manufactured by Junsei Chemical Co., Ltd.), aliphatic polyglycidyl ether (21.97g, Denacol EX-1610, manufactured by Nagase ChemteX Corporation), organo silica sol (1.44 g, NBAC-ST, manufactured by Nissan Chemical Industries, Ltd, SiO₂ content: 30 mass%), 2-methylimidazole (0.51 g, manufactured by Shikoku Chemicals Corporation) and polyoxyalkylene triamine (4.06 g, JEFFAMINE T403, manufactured by HUNTSMAN) were added with stirring, followed by stirring at 25°C for 1 hour. Then, aminosilane (4.18 g, KBM903, manufactured by Shin-Etsu Chemical Co., Ltd.) was added with stirring, followed by stirring at 25°C for 3 hours. Further, acetone (20.03 g, manufactured by Junsei Chemical Co., Ltd.) and a leveling agent (0.05 g, BYK307, manufactured by BYK Japan K.K.) were added with stirring, to obtain water-absorptive resin layer-forming composition (B-11). The obtained water-absorptive resin layer-forming composition (B-11) is a water-absorptive resin layer-forming composition for a Comparative Example having a composition out of the range of the present invention.

### [Preparation Example B-12]

Into a glass container equipped with a stirrer and a thermometer, ethanol (27.78 g, manufactured by Junsei Chemical Co., Ltd.), methyl ethyl ketone (8.47 g, manufactured by Junsei Chemical Co., Ltd.), glycerin polyglycidyl ether (21.07g, Denacol EX-313, manufactured by Nagase ChemteX Corporation), organo silica sol (1.38 g, NBAC-ST, manufactured by Nissan Chemical Industries, Ltd, SiO₂ content: 30 mass%), 2-methylimidazole (0.41 g, manufactured by Shikoku Chemicals Corporation) and polyoxyalkylene triamine (4.52 g, JEFFAMINE T403, manufactured by HUNTSMAN) were added with stirring, followed by stirring at 25°C for 1 hour. Then, aminosilane (4.65 g, KBM903, manufactured by Shin-Etsu Chemical Co., Ltd.) was added with stirring, followed by stirring at 25°C for 3 hours. Further, acetone (21.62 g, manufactured by Junsei Chemical Co., Ltd.) and a leveling agent (0.05 g, BYK307, manufactured by BYK Japan K.K.) were added with stirring, to obtain water-absorptive resin layer-forming composition (B-12). The obtained water-absorptive resin layer-forming composition (B-12) is a water-absorptive resin layer-forming composition for a Comparative Example having a composition out of the range of the present invention.

### [Preparation Example B-13]

Into a glass container equipped with a stirrer and a thermometer, ethanol (27.79 g, manufactured by Junsei Chemical Co., Ltd.), methyl ethyl ketone (7.86 g, manufactured by Junsei Chemical Co., Ltd.), aliphatic polyglycidyl ether (18.08 g, Denacol EX-1610, manufactured by Nagase ChemteX Corporation), glycerin polyglycidyl ether (3.74 g, Denacol EX-314, manufactured by Nagase ChemteX Corporation), organo silica sol (1.36 g, NBAC-ST, manufactured by Nissan Chemical Industries, Ltd, SiO₂ content: 30 mass%), 2-methylimidazole (0.51 g, manufactured by Shikoku Chemicals Corporation) and polyoxyalkylene triamine (4.14 g, JEFFAMINE T403, manufactured by HUNTSMAN) were added with stirring, followed by stirring at 25°C for 1 hour. Then, aminosilane (4.27 g, KBM903, manufactured by Shin-Etsu Chemical Co., Ltd.) was added with stirring, followed by stirring at 25°C for 3 hours. Further, acetone (22.24 g, manufactured by Junsei Chemical Co., Ltd.) and a leveling agent (0.05 g, BYK307, manufactured by BYK Japan K.K.) were added with stirring, to obtain water-absorptive resin layer-forming composition (B-13). The obtained water-absorptive resin layer-forming composition (B-13) is a water-absorptive resin layer-forming composition for a Comparative Example having a composition out of the range of the present invention.

### [Preparation Example B-14]

Into a glass container equipped with a stirrer and a thermometer, ethanol (27.77 g, manufactured by Junsei Chemical Co., Ltd.), methyl ethyl ketone (9.39 g, manufactured by Junsei Chemical Co., Ltd.), aliphatic polyglycidyl ether (11.80 g, Denacol EX-1610, manufactured by Nagase ChemteX Corporation), glycerin polyglycidyl ether (9.80 g, Denacol EX-313, manufactured by Nagase ChemteX Corporation), organo silica sol (1.42 g, NBAC-ST, manufactured by Nissan Chemical Industries, Ltd, SiO₂ content: 30 mass%), 2-methylimidazole (0.51 g, manufactured by Shikoku Chemicals Corporation) and polyoxyalkylene triamine (4.25 g, JEFFAMINE T403, manufactured by HUNTSMAN) were added with stirring, followed by stirring at 25°C for 1 hour. Then, aminosilane (4.38 g, KBM903, manufactured by Shin-Etsu Chemical Co., Ltd.) was added with stirring, followed by stirring at 25°C for 3 hours. Further, acetone (20.70 g, manufactured by Junsei Chemical Co., Ltd.) and a leveling agent (0.05 g, BYK307, manufactured by BYK Japan K.K.) were added with stirring, to obtain water-absorptive resin layer-forming composition (B-14).

### [Preparation Example B-15]

Into a glass container equipped with a stirrer and a thermometer, ethanol (27.76 g, manufactured by Junsei Chemical Co., Ltd.), methyl ethyl ketone (10.13 g, manufactured by Junsei Chemical Co., Ltd.), aliphatic polyglycidyl ether (12.03 g, Denacol EX-1610, manufactured by Nagase ChemteX Corporation), polyglycerin polyglycidyl ether (9.99 g, Denacol EX-512, manufactured by Nagase ChemteX Corporation), organo silica sol (1.45 g, NBAC-ST, manufactured by Nissan Chemical Industries, Ltd, SiO₂ content: 30 mass%), 2-methylimidazole (0.52 g, manufactured by Shikoku Chemicals Corporation) and polyoxyalkylene triamine (4.03 g, JEFFAMINE T403, manufactured by HUNTSMAN) were added with stirring, followed by stirring at 25°C for 1 hour. Then, aminosilane (4.15 g, KBM903, manufactured by Shin-Etsu Chemical Co., Ltd.) was added with stirring, followed by stirring at 25°C for 3 hours. Further, acetone (20.70 g, manufactured by Junsei Chemical Co., Ltd.) and a leveling agent (0.05 g, BYK307, manufactured by BYK Japan K.K.) were added with stirring, to obtain water-absorptive resin layer-forming composition (B-15).

### [Preparation Example B-16]

Into a glass container equipped with a stirrer and a thermometer, ethanol (27.78 g, manufactured by Junsei Chemical Co., Ltd.), methyl ethyl ketone (8.94 g, manufactured by Junsei Chemical Co., Ltd.), aliphatic polyglycidyl ether (11.66 g, Denacol EX-1410, manufactured by Nagase ChemteX Corporation), glycerin polyglycidyl ether (9.68 g, Denacol EX-313, manufactured by Nagase ChemteX Corporation), organo silica sol (1.40 g, NBAC-ST, manufactured by Nissan Chemical Industries, Ltd, SiO₂ content: 30 mass%), 2-methylimidazole (0.50 g, manufactured by Shikoku Chemicals Corporation) and polyoxyalkylene triamine (4.38 g, JEFFAMINE T403, manufactured by HUNTSMAN) were added with stirring, followed by stirring at 25°C for 1 hour. Then, aminosilane (4.51 g, KBM903, manufactured by Shin-Etsu Chemical Co., Ltd.) was added with stirring, followed by stirring at 25°C for 3 hours. Further, acetone (21.15 g, manufactured by Junsei Chemical Co., Ltd.) and a leveling agent (0.05 g, BYK307, manufactured by BYK Japan K.K.) were added with stirring, to obtain water-absorptive resin layer-forming composition (B-16).

### [Preparation Example B-17]

Into a glass container equipped with a stirrer and a thermometer, ethanol (27.76 g, manufactured by Junsei Chemical Co., Ltd.), methyl ethyl ketone (9.85 g, manufactured by Junsei Chemical Co., Ltd.), polyglycerin polyglycidyl ether (11.94 g, Denacol EX-521, manufactured by Nagase ChemteX Corporation), glycerin polyglycidyl ether (9.92 g, Denacol EX-313, manufactured by Nagase ChemteX Corporation), organo silica sol (1.44 g, NBAC-ST, manufactured by Nissan Chemical Industries, Ltd, SiO₂ content: 30 mass%), 2-methylimidazole (0.51 g, manufactured by Shikoku Chemicals Corporation) and polyoxyalkylene triamine (4.11 g, JEFFAMINE T403, manufactured by HUNTSMAN) were added with stirring, followed by stirring at 25°C for 1 hour. Then, aminosilane (4.24 g, KBM903, manufactured by Shin-Etsu Chemical Co., Ltd.) was added with stirring, followed by stirring at 25°C for 3 hours. Further, acetone (20.23 g, manufactured by Junsei Chemical Co., Ltd.) and a leveling agent (0.05 g, BYK307, manufactured by BYK Japan K.K.) were added with stirring, to obtain water-absorptive resin layer-forming composition (B-17).

### [Preparation Example B-18]

Into a glass container equipped with a stirrer and a thermometer, ethanol (27.75 g, manufactured by Junsei Chemical Co., Ltd.), methyl ethyl ketone (10.58 g, manufactured by Junsei Chemical Co., Ltd.), aliphatic polyglycidyl ether (12.17 g, Denacol EX-610U, manufactured by Nagase ChemteX Corporation), glycerin polyglycidyl ether (10.11g, Denacol EX-313, manufactured by Nagase ChemteX Corporation), organo silica sol (1.46 g, NBAC-ST, manufactured by Nissan Chemical Industries, Ltd, SiO₂ content: 30 mass%), 2-methylimidazole (0.52 g, manufactured by Shikoku Chemicals Corporation) and polyoxyalkylene triamine (3.90 g, JEFFAMINE T403, manufactured by HUNTSMAN) were added with stirring, followed by stirring at 25°C for 1 hour. Then, aminosilane (4.02 g, KBM903, manufactured by Shin-Etsu Chemical Co., Ltd.) was added with stirring, followed by stirring at 25°C for 3 hours. Further, acetone (19.49 g, manufactured by Junsei Chemical Co., Ltd.) and a leveling agent (0.05 g, BYK307, manufactured by BYK Japan K.K.) were added with stirring, to obtain water-absorptive resin layer-forming composition (B-18).

### [Preparation Example B-19]

Into a glass container equipped with a stirrer and a thermometer, ethanol (27.77 g, manufactured by Junsei Chemical Co., Ltd.), methyl ethyl ketone (9.09 g, manufactured by Junsei Chemical Co., Ltd.), aliphatic polyglycidyl ether (8.57 g, Denacol EX-1610, manufactured by Nagase ChemteX Corporation), glycerin polyglycidyl ether (12.85 g, Denacol EX-313, manufactured by Nagase ChemteX Corporation), organo silica sol (1.41 g, NBAC-ST, manufactured by Nissan Chemical Industries, Ltd, SiO₂ content: 30 mass%), 2-methylimidazole (0.50 g, manufactured by Shikoku Chemicals Corporation) and polyoxyalkylene triamine (4.34 g, JEFFAMINE T403, manufactured by HUNTSMAN) were added with stirring, followed by stirring at 25°C for 1 hour. Then, aminosilane (4.47 g, KBM903, manufactured by Shin-Etsu Chemical Co., Ltd.) was added with stirring, followed by stirring at 25°C for 3 hours. Further, acetone (21.00 g, manufactured by Junsei Chemical Co., Ltd.) and a leveling agent (0.05 g, BYK307, manufactured by BYK Japan K.K.) were added with stirring, to obtain water-absorptive resin layer-forming composition (B-19).

### [Preparation Example B-20]

Into a glass container equipped with a stirrer and a thermometer, ethanol (27.77 g, manufactured by Junsei Chemical Co., Ltd.), methyl ethyl ketone (9.56 g, manufactured by Junsei Chemical Co., Ltd.), aliphatic polyglycidyl ether (15.19 g, Denacol EX-1610, manufactured by Nagase ChemteX Corporation), glycerin polyglycidyl ether (6.51 g, Denacol EX-313, manufactured by Nagase ChemteX Corporation), organo silica sol (1.43 g, NBAC-ST, manufactured by Nissan Chemical Industries, Ltd, SiO₂ content: 30 mass%), 2-methylimidazole (0.51 g, manufactured by Shikoku Chemicals Corporation) and polyoxyalkylene triamine (4.20 g, JEFFAMINE T403, manufactured by HUNTSMAN) were added with stirring, followed by stirring at 25°C for 1 hour. Then, aminosilane (4.33 g, KBM903, manufactured by Shin-Etsu Chemical Co., Ltd.) was added with stirring, followed by stirring at 25°C for 3 hours. Further, acetone (20.52 g, manufactured by Junsei Chemical Co., Ltd.) and a leveling agent (0.05 g, BYK307, manufactured by BYK Japan K.K.) were added with stirring, to obtain water-absorptive resin layer-forming composition (B-20).

Of the above obtained water-absorptive resin layer-forming compositions B-1] to B-20, the composition and the equivalent ratio of amine's active hydrogens to epoxy groups are shown in Table 2. In Table 2, the amounts of the first polyepoxide component and the first curing agent (amine compound) represent the amounts (mass%) of the respective components to the entire amount of the water-absorptive resin layer-forming composition, and the amounts of the silane coupling agent and the additive represent mass percentages (%) to the total mass of the first polyepoxide component and the first curing agent (amine compound) contained in the water-absorptive resin layer-forming composition. Further, the amount of the imidazole compound represents the mass percentage (%) to the total mass of the first polyepoxide component.

**Table 2**

| Composition No. | Amine's active hydrogens/ epoxy groups | First polyepoxide component (X) | | | | | First curing agent: amine compound (Y) | Imidazole compound | Silane coupling agent | | Silica fine particles | Additive (excluding leveling agent) | |
|---|---|---|---|---|---|---|---|---|---|---|---|---|---|
| | | Low molecular weight epoxide | | High molecular weight epoxide | | Amount (wt%; based on composition) | | | | | | | |
| | | Type | Blend ratio | Type | Blend ratio | | Amount (wt%; based on composition) | Amount (wt%; based on (X)) | Type | Amount (wt%; based on (X)+(Y)) | Amount (wt%; based on (X)+(Y)) | Type | Amount (wt%; based on (X)+(Y)) |
| B-1 | 0.74 | EX313 | 45% | EX1610 | 55% | 20.7% | 4.1% | 2.4% | KBM903 | 16.9% | 1.6% | - | - |
| B-2 | 0.74 | EX313 | 45% | EX1610 | 55% | 24.0% | 4.7% | 2.5% | KBM903 | 17.1% | 1.6% | - | - |
| B-3 | 0.74 | EX313 | 45% | EX1610 | 55% | 27.7% | 5.5% | 2.2% | KBM903 | 16.9% | 1.7% | - | - |
| B-4 | 1.00 | EX313 | 45% | EX1610 | 55% | 21.8% | 5.5% | 2.3% | KBM903 | 23.4% | 1.6% | - | - |
| B-5 | 0.50 | EX313 | 45% | EX1610 | 55% | 26.4% | 4.0% | 2.3% | KBM903 | 10.2% | 1.7% | - | - |
| B-6 | 1.30 | EX313 | 45% | EX1610 | 55% | 20.1% | 10.2% | 2.5% | KBM903 | 11.6% | 1.3% | - | - |
| B-7 | 0.70 | EX313 | 45% | EX1610 | 55% | 20.9% | 8.5% | 2.4% | KBM403 | 14.6% | 1.4% | - | - |
| B-8 | 0.74 | EX313 | 45% | EX1610 | 55% | 24.0% | 4.7% | 2.5% | KBM903 | 17.1% | 1.6% | - | - |
| B-9 | 0.74 | EX313 | 45% | EX1610 | 55% | 24.0% | 4.7% | 2.5% | KBM903 | 17.1% | 1.6% | - | - |
| B-10 | 0.74 | EX313 | 45% | EX1610 | 55% | 24.0% | 4.7% | 2.5% | KBM903 | 17.1% | 1.6% | AO-50 | 1.2% |
| B-11 | 0.74 | - | 0% | EX1610 | 100% | 24.4% | 4.5% | 2.5% | KBM903 | 15.9% | 1.7% | - | - |
| B-12 | 0.74 | EX313 | 100% | - | 0% | 23.4% | 5.0% | 2.1% | KBM903 | 18.3% | 1.6% | - | - |
| B-13 | 0.74 | EX314 | 17% | EX1610 | 83% | 24.3% | 4.6% | 2.5% | KBM903 | 16.3% | 1.6% | - | - |
| B-14 | 0.74 | EX314 | 45% | EX1610 | 55% | 24.0% | 4.7% | 2.5% | KBM903 | 17.1% | 1.6% | - | - |
| B-15 | 0.74 | EX512 | 45% | EX1610 | 55% | 24.5% | 4.5% | 2.4% | KBM903 | 15.9% | 1.7% | - | - |
| B-16 | 0.74 | EX313 | 45% | EX1410 | 55% | 23.8% | 4.9% | 2.5% | KBM903 | 17.4% | 1.6% | - | - |
| B-17 | 0.74 | EX313 | 45% | EX521 | 55% | 24.3% | 4.6% | 2.5% | KBM903 | 16.3% | 1.7% | - | - |
| B-18 | 0.74 | EX313 | 45% | EX610U | 55% | 24.7% | 4.3% | 2.4% | KBM903 | 15.5% | 1.7% | - | - |
| B-19 | 0.74 | EX313 | 60% | EX1610 | 40% | 23.8% | 4.8% | 2.5% | KBM903 | 17.5% | 1.6% | - | - |
| B-20 | 0.74 | EX313 | 30% | EX1610 | 70% | 24.1% | 4.7% | 2.5% | KBM903 | 16.7% | 1.7% | - | - |

| | | | | | | | | | | | | | |
|---|---|---|---|---|---|---|---|---|---|---|---|---|---|
| *1: "EX" of polyepoxide represents "Denacol EX". *4: "AO-50" of additive represents "ADK STAB AO-50". | | | | | | | | | | | | | |

### <3> Production and evaluation of anti-fogging article

Using each of compositions obtained in the above Preparation Examples, an anti-fogging film was formed on a substrate as follows, followed by evaluation by the above evaluation method. The obtained results are shown in Tables 3 to 5.

### [Example 1]

Using as a substrate a clean polycarbonate substrate (water contact angle: 16°, 200 mm × 200 mm × 2 mm in thickness, Panlite PC-1151, manufactured by Teijin Chemicals Ltd.) from which the surface contaminant was removed with acetone and which was subjected to UV ozone gas treatment, resin underlayer-forming composition (A-1) obtained in Preparation Example A-1 was applied to the surface of the substrate by float coating and held in an electric furnace at 100°C for 30 minutes to form a resin underlayer. Then, to the surface of the formed resin underlayer, water-absorptive resin layer-forming composition (B-1) obtained in Preparation Example B-1 was applied by flow coating and held in an electric furnace at 100°C for 30 minutes to form a water-absorptive resin layer, thereby to obtain an anti-fogging article having an anti-fogging film comprising the resin underlayer and the water-absorptive resin layer. The evaluation results are shown in Table 3.

### [Examples 2 to 11 and 26 to 28]

Using as a substrate a clean soda lime glass substrate (water contact angle: 3°, 200 mm × 200 mm × 2 mm in thickness), the surface of which was cleaned by polishing with cerium oxide and dried, resin underlayer-forming composition obtained in Preparation Example A (any one of A-1 to A-3 and A-11) as identified in Table 3 (Examples 2 to 11) or Table 4 (Examples 26 to 28) was applied to the surface of the glass substrate by flow coating and held in an electric furnace at 100°C for 1 hour to form resin underlayer. Then, to the surface of the formed resin underlayer, water-absorptive resin layer-forming composition obtained in Preparation Example B (any one of B-1 to B-3 and B-11 to B-20) as identified in Table 3 (Examples 2 to 11) or Table 4 (Examples 26 to 28) was applied by flow coating and held in an electric furnace at 100°C for 1 hour to form a water-absorptive resin layer, thereby to obtain an anti-fogging article having an anti-fogging film comprising two layers. The evaluation results are shown in Table 3 (Examples 2 to 11) and Table 4 (Examples 26 to 28).

### [Example 12]

Using as a substrate a clean soda lime glass substrate (water contact angle: 3°, 200 mm × 200 mm × 2 mm in thickness), the surface of which was cleaned by polishing with cerium oxide and dried, resin underlayer-forming composition (A-3) obtained in Preparation Example A-3 was applied to the surface of the glass substrate by flow coating and held in an electric furnace at 100°C for 1 hour to form a resin underlayer. Then, to the surface of the formed resin underlayer, water-absorptive resin layer-forming composition (B-3) obtained in Preparation Example B-3 was applied by flow coating, held in an electric furnace at 100°C for 1 hour, and further dipped in warm water at 50°C for 5 minutes to form a water-absorptive resin layer, thereby to obtain an anti-fogging article having an anti-fogging film comprising two layers. The evaluation results are shown in Table 3.

**Table 3**

| | | Resin underlayer | | | | Water-absorptive resin layer | | | | Anti-fogging film | | | | | | |
|---|---|---|---|---|---|---|---|---|---|---|---|---|---|---|---|---|
| Ex. | Substrate | Composition No. | Film thickness [µm] | Water absorption anti-fogging property [sec.] | Reaction conditions | Composition No. | Film thickness [µm) | Reaction conditions | Warm water dipping | Film thickness [µm] | Water absorption anti-fogging property [sec.] | Outer appearance | Peel resistance | | | |
| | | | | | | | | | | | | | Vapor exposure | Weather resistance | Acid resistance | Abrasion resistance |
| 1 | PC | A-1 | 2.5 | 3 | 100deg 0.5h | B-1 | 9.4 | 100deg 0.5h | - | 11.9 | 40 | ○ | ○ | ○ | ○ | ○ |
| 2 | SPG | A-1 | 2.2 | 2 | 100deg 1h | B-1 | 8.5 | 100deg 1h | - | 10.7 | 45 | ○ | ⊚ | ○ | ○ | ○ |
| 3 | SPG | A-2 | 4.8 | 5 | 100deg 1h | B-2 | 16.4 | 100deg 1h | - | 21.2 | 83 | ○ | ⊚ | ○ | ○ | ○ |
| 4 | SPG | A-3 | 7.9 | 5 | 100deg 1h | B-3 | 25.8 | 100deg 1h | - | 33.7 | 159 | ○ | ⊚ | ○ | ○ | ○ |
| 5 | SPG | A-11 | 3.0 | 2 | 100deg 1h | B-14 | 20.5 | 100deg 1h | - | 23.5 | 123 | ○ | ⊚ | ○ | ○ | ○ |
| 6 | SPG | A-11 | 2.0 | 3 | 100deg 1h | B-15 | 18.9 | 100deg 1h | - | 20.9 | 86 | ○ | ⊚ | ○ | ○ | ○ |
| 7 | SPG | A-11 | 2.5 | 3 | 100deg 1h | B-16 | 14.6 | 100deg 1h | - | 17.1 | 70 | ○ | ⊚ | ○ | ○ | ○ |
| 8 | SPG | A-11 | 3.5 | 3 | 100deg 1h | B-17 | 15.8 | 100deg 1h | - | 19.3 | 79 | ○ | ⊚ | ○ | ○ | ○ |
| 9 | SPG | A-11 | 3.3 | 4 | 100deg 1h | B-18 | 12.5 | 100deg 1h | - | 15.8 | 66 | ○ | ⊚ | ○ | ○ | ○ |
| 10 | SPG | A-11 | 3.1 | 5 | 100deg 1h | B-19 | 17.6 | 100deg 1h | - | 20.7 | 132 | ○ | ⊚ | ○ | ○ | ○ |
| 11 | SPG | A-11 | 2.8 | 5 | 100deg 1h | B-20 | 19.2 | 100deg 1h | | 22.0 | 124 | ○ | ⊚ | ○ | ○ | ○ |
| 12 | SPG | A-3 | 7.5 | 4 | 100deg 1h | B-3 | 25.8 | 100deg 1h | 50deg 5min | 33.3 | 224 | ○ | ⊚ | ○ | ○ | ○ |

SPG: Single plate glass

**Table 4**

| Ex. | Substrate | Resin underlayer | | | | Water-absorptive resin layer | | | Warm water dipping | Anti-fogging film | | | | | | |
|---|---|---|---|---|---|---|---|---|---|---|---|---|---|---|---|---|
| | | Composition No. | Film thickness [µm] | Water absorption anti-fogging property [sec.] | Reaction conditions | Composition No. | Film thickness [µm] | Reaction conditions | | Film thickness [µm] | Water absorption anti-fogging property [sec.] | Outer appearance | Peel resistance | | | Abrasion resistance |
| | | | | | | | | | | | | | Vapor exposure | Weather resistance | Acid resistance | |
| 26 | SPG | A-11 | 3.1 | 2 | 100deg 1h | B-11 | 15.1 | 100deg 1h | - | 18.2 | 130 | × | ⊚ | ○ | ○ | ○ |
| 27 | SPG | A-11 | 3.1 | 2 | 100deg 1h | B-12 | 20.3 | 100deg 1h | - | 23.4 | 162 | ○ | ⊚ | ○ | ○ | × |
| 28 | SPG | A-11 | 3.0 | 3 | 100deg 1h | B-13 | 21.3 | 100deg 1h | - | 24.3 | 150 | ○ | ⊚ | ○ | ○ | × |

| | | | | | | | | | | | | | | | | |
|---|---|---|---|---|---|---|---|---|---|---|---|---|---|---|---|---|
| SPG: Single plate glass | | | | | | | | | | | | | | | | |

### [Examples 13 to 24]

Using as a substrate a clean soda lime glass substrate (water contact angle: 3°, 200 mm × 200 mm × 2 mm in thickness), the surface of which was cleaned by polishing with cerium oxide and dried, resin underlayer-forming composition obtained in Preparation Example A (any one of A-1 to A-12) as identified in Table 5 was applied to the surface of the glass substrate by flow coating and held in an electric furnace at 90°C for 10 minutes, and then held in a constant temperature and constant humidity chamber at 90°C under 70%RH for 20 minutes to form a resin underlayer. Then, to the surface of the formed resin underlayer, water-absorptive resin layer-forming composition obtained in Preparation Example B (any one of B-1 to B-10) as identified in Table 5 was applied by flow coating and held in an electric furnace at 90°C for 10 minutes and then held in a constant temperature and constant humidity chamber at 90°C under 70%RH for 20 minutes, and further dipped in warm water at 50°C for 5 minutes to form a water-absorptive resin layer, thereby to obtain an anti-fogging article having an anti-fogging film comprising two layers. The evaluation results are shown in Table 5.

### [Example 25]

Using as a substrate a clean laminated glass substrate for automobile windshield (water contact angle: 5°), the surface of which was cleaned by polishing with cerium oxide and dried, resin underlayer-forming composition (A-11) obtained in Preparation Example A-11 was applied to the surface of the glass substrate by flow coating and held in an electric furnace at 100°C for 1 hour to form a resin underlayer. Then, to the surface of the formed resin underlayer, water-absorptive resin layer-forming composition (B-9) obtained in Preparation Example B-9 was applied by flow coating and held in an electric furnace at 100°C for 1 hour to form a water-absorptive resin layer, followed by modularization so that the obtainable article could be attached to the front portion of an automobile, thereby to obtain an article for a transport vehicle having an anti-fogging film comprising two layers. The evaluation results are shown in Table 5.

**Table 5**

| Ex. | Substrate | Resin underlayer | | | | Water-absorptive resin layer | | | Warm water dipping | Anti-fogging film | | | | | | |
|---|---|---|---|---|---|---|---|---|---|---|---|---|---|---|---|---|
| | | Composition No. | Film thickness [µm] | Water absorption anti-fogging property [sec.] | Reaction conditions | Composition No. | Film thickness [µm] | Reaction conditions | | Film thickness [µm] | Water absorption anti-fogging property [sec.] | Outer appearance | Peel resistance | | | Abrasion resistance |
| | | | | | | | | | | | | | Vapor exposure | Weather resistance | Acid resistance | |
| 13 | SPG | A-1 | 3.5 | 3 | 90deg70%RH 20 min | B-1 | 9.7 | 90deg70%RH 20 min | 50deg 5min | 13.2 | 126 | ○ | ⊚ | ○ | ○ | ○ |
| 14 | SPG | A-2 | 6.4 | 4 | 90deg70%RH 20 min | B-2 | 18.8 | 90deg70%RH 20 min | 50deg 5min | 25.2 | 283 | ○ | ⊚ | ○ | ○ | ○ |
| 15 | SPG | A-3 | 9.7 | 5 | 90deg70%RH 20 min | B-3 | 27.9 | 90deg70%RH 20 min | 50deg 5min | 37.6 | 375 | ○ | ⊚ | ○ | ○ | ○ |
| 16 | SPG | A-4 | 5.3 | 4 | 90deg70%RH 20 min | B-4 | 20.1 | 90deg70%RH 20 min | 50deg 5min | 25.4 | 251 | ○ | ○ | ○ | ○ | ○ |
| 17 | SPG | A-5 | 4.5 | 9 | 90deg70%RH 20 min | B-5 | 17.6 | 90deg70%RH 20 min | 50deg 5min | 22.1 | 220 | ○ | ○ | ○ | ○ | ○ |
| 18 | SPG | A-6 | 4.0 | 10 | 90deg70%RH 20 min | B-6 | 23.1 | 90deg70%RH 20 min | 50deg 5min | 27.1 | 241 | ○ | ○ | ○ | ○ | ○ |
| 19 | SPG | A-7 | 3.8 | 8 | 90deg70%RH 20 min | B-7 | 15.6 | 90deg70%RH 20 min | 50deg 5min | 19.4 | 178 | ○ | ○ | ○ | ○ | ○ |
| 20 | SPG | A-8 | 2.7 | 5 | 90deg70%RH 20 min | B-8 | 24.1 | 90deg70%RH 20 min | 50deg 5min | 26.8 | 255 | ○ | ⊚ | ⊚ | ○ | ○ |
| 21 | SPG | A-9 | 3.2 | 9 | 90deg70%RH 20 min | B-9 | 24.5 | 90deg70%RH 20 min | 50deg 5min | 27.7 | 210 | ○ | ⊚ | ⊚ | ○ | ○ |
| 22 | SPG | A-10 | 3.0 | 5 | 90deg70%RH 20 min | B-10 | 21.0 | 90deg70%RH 20 min | 50deg 5min | 24.0 | 246 | ○ | ⊚ | ⊚ | ○ | ○ |
| 23 | SPG | A-11 | 3.3 | 4 | 90deg70%RH 20 min | B-9 | 21.5 | 90deg70%RH 20 min | 50deg 5min | 24.8 | 261 | ○ | ⊚ | ⊚ | ○ | ○ |
| 24 | SPG | A-12 | 3.6 | 5 | 90deg70%RH 20 min | B-9 | 20.5 | 90deg70%RH 20 min | 50deg 5min | 24.1 | 246 | ○ | ○ | ⊚ | ○ | ○ |
| 25 | LG | A-11 | 1.0-3.5 | 4 | 100deg1h | B-9 | 6.3-25.2 | 100deg1h | - | 7.3-28.7 | 56-126 | ○ | ⊚ | ⊚ | ○ | ○ |

| | | | | | | | | | | | | | | | | |
|---|---|---|---|---|---|---|---|---|---|---|---|---|---|---|---|---|
| SPG: Single plate glass LG: Laminated glass | | | | | | | | | | | | | | | | |

It is found from the evaluation results shown in Tables 3 to 5, the anti-fogging article obtained in each of Examples 1 to 25 which are Examples of the present invention has excellent anti-fogging property, and outer appearance, peel resistance and abrasion resistance, whereas the anti-fogging article obtained in each of Examples 26 to 28 which are Comparative Examples, is insufficient in either of outer appearance and abrasion resistance.

Here, evaluation of the water absorption anti-fogging property was conducted with respect to the surface of the resin underlayer at a stage where the resin underlayer was formed, and further conducted with respect to the surface of the anti-fogging film at a stage of the anti-fogging article having the water-absorptive resin layer formed on the surface of the resin underlayer, i.e. the surface of the water-absorptive resin layer after the water-absorptive resin layer was laminated on the resin underlayer. Here, results of evaluation of the water absorption anti-fogging property of the water-absorptive resin layer alone were not obtained. However, in each Example, the film thickness of the water-absorptive resin layer is thicker by at least 2.5 times than the film thickness of the resin underlayer, and it is considered that it is the water absorption rate of the water-absorptive resin layer that dominates the water absorption anti-fogging property, and accordingly the water absorption anti-fogging property on the surface of the anti-fogging film can be considered to be substantially equal to the water absorption anti-fogging property of the water-absorptive resin layer.

### INDUSTRIAL APPLICABILITY

The anti-fogging article of the present invention is excellent in outer appearance in addition to excellent anti-fogging property and durability such as the abrasion resistance and the peel resistance, and therefore it is useful as anti-fogging glass for automobiles and for buildings.

## Claims

1. An anti-fogging article having a substrate and an anti-fogging film on at least part of the surface of the substrate, wherein:
the anti-fogging film comprises a resin underlayer and a water-absorptive resin layer laminated in this order on the substrate surface;
the water-absorptive resin layer is a water-absorptive resin layer composed mainly of a first cured epoxy resin obtained by reacting a water-absorptive resin layer-forming composition containing a first polyepoxide component consisting of a low molecular weight polyepoxide having a molecular weight of from 200 to 800 and a high molecular weight polyepoxide having a molecular weight of from 900 to 2,000 in a mass ratio of the low molecular weight polyepoxide: the high molecular weight polyepoxide of from 30:70 to 70:30, and a first curing agent;
the resin underlayer is a resin underlayer composed mainly of a second cured epoxy resin obtained by reacting a resin underlayer-forming composition containing a second polyepoxide component and a second curing agent, having water absorption property lower than that of the water-absorptive resin layer; and
the resin underlayer-forming composition further contains a tetraalkoxysilane and/or its oligomer.

2. The anti-fogging article according to Claim 1, wherein the molecular weight of the low molecular polyepoxide is from 300 to 700, and the molecular weight of the high molecular weight polyepoxide is from 900 to 1,450.

3. The anti-fogging article according to Claim 1 or 2, wherein each of the high molecular weight polyepoxide and the low molecular weight polyepoxide is a glycidyl ether type polyepoxide having no aromatic nucleus.

4. The anti-fogging article according to any one of Claims 1 to 3, wherein the high molecular weight polyepoxide is selected from the group consisting of polyethylene glycol polyglycidyl ether, polyglycerin polyglycidyl ether and polyethylene glycol sorbitol polyglycidyl ether, and the low molecular weight polyepoxide is selected from the group consisting of glycerin polyglycidyl ether, polyglycerin polyglycidyl ether and sorbitol polyglycidyl ether.

5. The anti-fogging article according to any one of Claims 1 to 4, wherein the water-absorptive resin layer-forming composition contains from 15 to 30 mass% of the first polyepoxide component and from 3 to 20 mass% of the first curing agent, to the entire amount of the water-absorptive resin layer-forming composition, and the resin underlayer-forming composition contains from 4 to 10 mass% of the second polyepoxide component and from 0.1 to 4.0 mass% of the second curding agent, to the entire amount of the resin underlayer-forming composition.

6. The anti-fogging article according to any one of Claims 1 to 5, wherein each of the first curing agent and the second curding agent comprises an amine compound having active hydrogen.

7. The anti-fogging article according to Claim 6, wherein the equivalent ratio of amine's active hydrogens to epoxy groups in all the components constituting the water-absorptive resin layer-forming composition is from 0.6 to 0.8, and the equivalent ratio of amine's active hydrogens to epoxy groups in all the components constituting the resin underlayer-forming composition is from 1.2 to 1.5.

8. The anti-fogging article according to Claim 6 or 7, wherein the first curing agent further includes an imidazole compound.

9. The anti-fogging article according to Claim 8, wherein the content of the imidazole compound is from 1.0 to 20 mass% to the first polyepoxide component.

10. The anti-fogging article according to any one of Claims 1 to 9, wherein the anti-fogging film is free from peeling, cracks and whitening, in a test such that the anti-fogging film is formed on one side of a 2 mm-thick glass substrate, irradiated with light for 160 hours through the glass substrate from the non-film surface side without anti-fogging film of the glass substrate, using a sunshine carbon arc lamp weather resistance testing machine in accordance with JIS D0205 (WAL-1H), and further held in a constant temperature and constant humidity chamber at 85°C under 90%RH for 500 hours, and the surface of the anti-fogging film is washed with ethanol.

11. The anti-fogging article according to any one of Claims 1 to 10, wherein the second polyepoxide component consists of an aliphatic polyepoxide.

12. The anti-fogging article according to any one of Claims 1 to 11, wherein the water-absorptive resin layer-forming composition and the resin underlayer-forming composition further contain a silane coupling agent.

13. The anti-fogging article according to Claim 12, wherein the content of the silane coupling agent is from 5 to 40 mass% to the total mass of the first polyepoxide component and the first curing agent in the water-absorptive resin layer-forming composition, and is from 5 to 50 mass% to the total mass of the second polyepoxide component and the second curing agent in the resin underlayer-forming composition.

14. The anti-fogging article according to any one of Claims 1 to 13, wherein the content of the tetraalkoxysilane and/or its oligomer is from 10 to 40 mass% to the total mass of the second polyepoxide component and the second curing agent.

15. The anti-fogging article according to any one of Claims 1 to 14, wherein the resin underlayer-forming composition further contains an antioxidant.

16. The anti-fogging article according to Claim 15, wherein the content of the antioxidant is from 0.5 to 3 mass% to the total mass of the second polyepoxide component and the second curing agent.

17. The anti-fogging article according to any one of Claims 1 to 16, wherein the substrate is a soda lime glass.

18. A process for producing the anti-fogging article as defined in any one of Claims 1 to 17, which comprises:
a step of applying the resin underlayer-forming composition containing the second polyepoxide component and the second curing agent, to the surface of a substrate, followed by reaction to form the resin underlayer composed mainly of the second cured epoxy resin; and
a step of applying, to the surface of the resin underlayer, the water-absorptive resin layer-forming composition containing the first polyepoxide component consisting of the low molecular weight polyepoxide having a molecular weight of from 200 to 800 and the high molecular weight polyepoxide having a molecular weight of from 900 to 2,000 in a mass ratio of the low molecular weight polyepoxide: the high molecular weight polyepoxide of from 30:70 to 70:30, and the first curing agent, followed by reaction to form the water-absorptive resin layer composed mainly of the first cured epoxy resin;
wherein the resin underlayer-forming composition further contains a tetraalkoxysilane and/or its oligomer.

19. The production process according to Claim 18, wherein the reaction of the resin underlayer-forming composition and the reaction of the water-absorptive resin layer-forming composition are carried out under humidified conditions of from 40 to 80%RH.

20. The production process according to Claim 18 or 19, wherein after the step of forming the water-absorptive resin layer, the obtained substrate provided with the resin underlayer and the water-absorptive resin layer is dipped in warm water.

## Patentansprüche

1. Antibeschlaggegenstand, welcher ein Substrat und einen Antibeschlagfilm auf mindestens einem Teil der Oberfläche des Substrats aufweist, wobei:
Der Antibeschlagsfilm eine Harzunterschicht und eine wasserabsorptive Harzschicht, laminiert in dieser Reihenfolge auf der Substratoberfläche, umfaßt;
die wasserabsorptive Harzschicht eine wasserabsorptive Harzschicht ist, welche im wesentlichen zusammengesetzt ist aus einem ersten gehärteten Epoxidharz, erhalten durch Umsetzen einer wasserabsorptiven Harzschicht bildenden Zusammensetzung, enthaltend eine erste Polyepoxidkomponente, bestehend aus einem Polyepoxid niedrigen Molekulargewichts mit einem Molekulargewicht von 200 bis 800 und ein Polyepoxid hohen Molekulargewichts mit einem Molekulargewicht von 900 bis 2000 in einem Massenverhältnis das Polyepoxid mit niedrigem Molekulargewicht : das Polyepoxid mit hohem Molekulargewicht von 30:70 bis 70:30, und ein erstes Härtungsmittel;
die Harzunterschicht eine Harzunterschicht ist, welche im wesentlichen aus einem zweiten gehärteten Epoxidharz zusammengesetzt ist, erhalten durch Umsetzen einer Harzunterschicht bildenden Zusammensetzung, enthaltend eine zweite Epoxidkomponente und ein zweites Härtungsmittel, welche eine Wasserabsorptionseigenschaft aufweist, die niedriger ist als die der wasserabsorptiven Harzschicht; und
die Harzunterschicht bildende Zusammensetzung weiter ein Tetraalkoxysilan und/oder dessen Oligomer enthält.

2. Antibeschlaggegenstand nach Anspruch 1, wobei das Molekulargewicht des Polyepoxids niedrigen Molekulargewichts 300 bis 700 beträgt, und das Molekulargewicht des Polyepoxids hohen Molekulargewichts 900 bis 1450 beträgt.

3. Antibeschlaggegenstand nach Anspruch 1 oder 2, wobei jedes von dem Polyepoxid hohen Molekulargewichts und dem Polyepoxid niedrigen Molekulargewichts ein Polyepoxid vom Glycidylethertyp ist, welches keinen aromatischen Kern aufweist.

4. Antibeschlaggegenstand nach einem der Ansprüche 1 bis 3, wobei das Polyepoxid hohen Molekulargewichts ausgewählt ist aus der Gruppe, bestehend aus Polyethylenglycolpolyglycidylether, Polyglycerinpolyglycidylether und Polyethylenglycolsorbitolpolyglycidylether, und das Polyepoxid niedrigen Molekulargewichts ausgewählt ist aus der Gruppe, bestehend aus Glycerinpolyglycidylether, Polyglycerinpolyglycidylether und Sorbitolpolyglycidylether.

5. Antibeschlaggegenstand nach einem der Ansprüche 1 bis 4, wobei die wasserabsorptive Harzschicht bildende Zusammensetzung 15 bis 30 Massenprozent der ersten Polyepoxidkomponente und 3 bis 20 Massenprozent des ersten Härtungsmittels, bezogen auf die Gesamtmenge der wasserabsorptiven Harzschicht bildenden Zusammensetzung enthält, und die Harzunterschicht bildende Zusammensetzung 4 bis 10 Massenprozent der zweiten Polyepoxidkomponente und 0,1 bis 4,0 Massenprozent des zweiten Härtungsmittels, bezogen auf die Gesamtmenge der Harzunterschicht bildenden Zusammensetzung, enthält.

6. Antibeschlaggegenstand nach einem der Ansprüche 1 bis 5, wobei jedes von dem ersten Härtungsmittel und dem zweiten Härtungsmittel eine Aminverbindung mit aktivem Wasserstoff umfaßt.

7. Antibeschlaggegenstand nach Anspruch 6, wobei das Äquivalentverhältnis von aktiven Wasserstoffen des Amins zu Epoxygruppen in all den Komponenten, welche die wasserabsorptive Harzschicht bildende Zusammensetzung darstellen, 0,6 bis 0,8 beträgt, und das Äquivalentverhätnis von aktiven Wasserstoffen des Amins zu Epoxidgruppen all den Komponenten, welche die Harzunterschicht bildende Zusammensetzung darstellen, 1,2 bis 1,5 beträgt.

8. Antibeschlagartikel nach Anspruch 6 oder 7, wobei das erste Härtungsmittel weiter eine Imidazolverbindung einschließt.

9. Antibeschlaggegenstand nach Anspruch 8, wobei der Gehalt der Imidazolverbindung 1,0 bis 20 Massenprozent, bezogen auf die erste Polyepoxidkomponente, beträgt.

10. Antibeschlaggegenstand nach einem der Ansprüche 1 bis 9, wobei der Antibeschlagfilm frei ist von Ablösen, Rissen und Ausbleichen, in einem Test, wonach der Antibeschlagfilm auf einer Seite eines 2 mm dicken Glassubstrats gebildet wird, mit Licht für 160 Stunden durch das Glassubstrat von der Nichtfilmoberflächenseite ohne Antibeschlagsfilm auf dem Glassubstrat unter Verwendung einer Sonnenlichtkohlenstoffbogenlampen-Wetterbeständigkeitstestmaschine in Übereinstimmung mit JIS D0205 (WAL-1H) bestrahlt wird, und weiter in einer Kammer konstanter Temperatur und konstanter Luftfeuchtigkeit bei 85°C unter 90% relativer Feuchte für 500 Stunden gehalten wird, und die Oberfläche des Antibeschlagfilms mit Ethanol gewaschen wird.

11. Antibeschlaggegenstand nach einem der Ansprüche 1 bis 10, wobei die zweite Polyepoxidkomponente aus einem aliphatischen Polyepoxid besteht.

12. Antibeschlaggegenstand nach einem der Ansprüche 1 bis 11, wobei die wasserabsorptive Harzschicht bildende Zusammensetzung und die Harzunterschicht bildende Zusammensetzung weiter ein Silankopplungsmittel enthalten.

13. Antibeschlaggegenstand nach Anspruch 12, wobei der Gehalt des Silankopplungsmittels 5 bis 40 Massenprozent, bezogen auf die Gesamtmasse der ersten Polyepoxidkomponente und des ersten Härtungsmittels in der wasserabsorptiven Harzschicht bildenden Zusammensetzung, beträgt, und 5 bis 50 Massenprozent, bezogen auf die Gesamtmasse der zweiten Polyepoxidkomponente und des zweiten Härtungsmittels in der Harzunterschicht bildenden Zusammensetzung, beträgt.

14. Antibeschlaggegenstand nach einem der Ansprüche 1 bis 13, wobei der Gehalt des Tetraalkoxysilans und/oder dessen Oligomers 10 bis 40 Massenprozent, bezogen auf die Gesamtmasse der zweiten Polyepoxidkomponente und des zweiten Härtungsmittels, beträgt.

15. Antibeschlaggegenstand nach einem der Ansprüche 1 bis 14, wobei die Harzunterschicht bildende Zusammensetzung weiter ein Antioxidationsmittel enthält.

16. Antibeschlaggegenstand nach Anspruch 15, wobei der Gehalt des Antioxidationsmittels 0,5 bis 3 Massenprozent, bezogen auf die Gesamtmasse der zweiten Polyepoxidkomponente und des zweiten Härtungsmittels, beträgt.

17. Antibeschlaggegenstand nach einem der Ansprüche 1 bis 16, wobei das Substrat ein Kalknatronglas ist.

18. Verfahren zur Herstellung des Antibeschlaggegenstands nach einem der Ansprüche 1 bis 17, umfassend:
Einen Schritt des Aufbringens der Harzunterschicht bildenden Zusammensetzung, enthaltend die zweite Polyepoxidkomponente und das zweite Härtungsmittel, auf die Oberfläche eines Substrats, gefolgt von Umsetzen, um die Harzunterschicht, zusammengesetzt im wesentlichen aus dem zweiten gehärteten Epoxidharz, zu bilden; und
einen Schritt des Auftragens, auf die Oberfläche der Harzunterschicht, der wasserabsorptiven Harzschicht bildenden Zusammensetzung, enthaltend die erste Polyepoxidkomponente, bestehend aus dem Polyepoxid niedrigen Molekulargewichts mit einem Molekulargewicht von 200 bis 800 und dem Polyepoxid hohen Molekulargewichts mit einem Molekulargewicht von 900 bis 2000 in einem Massenverhältnis das Polyepoxid mit niedrigem Molekulargewicht : das Polyepoxid mit hohem Polymolekulargewicht von 30:70 bis 70:30 und das erste Härtungsmittel, gefolgt vom Umsetzen, um die wasserabsorptive Harzschicht, welche im wesentlichen aus dem ersten gehärteten Epoxidharz zusammengesetzt ist, zu bilden;
wobei die Harzunterschicht bildende Zusammensetzung weiter ein Tetraalkoxysilan und/oder dessen Oligomer enthält.

19. Herstellungsverfahren nach Anspruch 18, wobei die Umsetzung der Harzunterschicht bildenden Zusammensetzung und die Umsetzung der wasserabsorptiven Harzschicht bildenden Zusammensetzung unter befeuchteten Bedingungen von 40 bis 80% relativer Feuchte durchgeführt werden.

20. Herstellungsverfahren nach Anspruch 18 oder 19, wobei nach dem Schritt des Bildens der wasserabsorptiven Harzschicht, das erhaltene Substrat, ausgerüstet mit der Harzunterschicht und der wasserabsorptiven Harzschicht, in warmes Wasser eingetaucht wird.

## Revendications

1. Article anticondensation présentant un substrat et un film anticondensation sur au moins une partie de la surface du substrat, dans lequel :
le film anticondensation comprend une sous-couche de résine et une couche de résine absorbant l'eau laminées dans cet ordre sur la surface de substrat ;
la couche de résine absorbant l'eau est une couche de résine absorbant l'eau composée principalement d'une première résine époxy durcie obtenue par réaction d'une composition de formation de couche de résine absorbant l'eau contenant un premier composant de polyépoxy composé d'un polyépoxy de poids moléculaire bas présentant un poids moléculaire de 200 à 800 et d'un polyépoxy de poids moléculaire élevé présentant un poids moléculaire de 900 à 2 000 dans un rapport de masse du polyépoxy de poids moléculaire bas : le polyépoxy de poids moléculaire élevé de 30:70 à 70:30, et un premier agent durcisseur ;
la sous-couche de résine est une sous-couche de résine composée principalement d'une seconde résine époxy durcie obtenue par réaction d'une composition de formation de sous-couche de résine contenant un second composant de polyépoxy et un second agent durcisseur, présentant une propriété d'absorption d'eau inférieure à celle de la couche de résine absorbant l'eau ; et
la composition de formation de sous-couche de résine contient en outre un tétraalcoxysilane et/ou son oligomère.

2. Article anticondensation selon la revendication 1, dans lequel le poids moléculaire du polyépoxy de poids moléculaire bas est de 300 à 700, et le poids moléculaire du polyépoxy de poids moléculaire élevé est de 900 à 1 450.

3. Article anticondensation selon la revendication 1 ou 2, dans lequel chacun du polyépoxy de poids moléculaire élevé et du polyépoxy de poids moléculaire bas est un polyépoxy de type éther glycidique ne présentant aucun noyau aromatique.

4. Article anticondensation selon l'une quelconque des revendications 1 à 3, dans lequel le polyépoxy de poids moléculaire élevé est sélectionné dans le groupe composé d'un éther de polyglycidyle de polyéthylène glycol, éther de polyglycidyle de polyglycérine et éther de polyglycidyle de sorbitol de polyéthylène glycol, et le polyépoxy de poids moléculaire bas est sélectionné dans le groupe composé d'un éther de polyglycidyle de glycérine, éther de polyglycidyle de polyglycérine et éther de polyglycidyle de sorbitol.

5. Article anticondensation selon l'une quelconque des revendications 1 à 4, dans lequel la composition de formation de couche de résine absorbant l'eau contient de 15 à 30 % en masse du premier composant de polyépoxy et de 3 à 20 % en masse du premier agent durcisseur par rapport à la quantité entière de la composition de formation de couche de résine absorbant l'eau, et la composition de formation de sous-couche de résine contient de 4 à 10 % en masse du second composant de polyépoxy et de 0,1 à 4 % en masse du second agent durcisseur, par rapport à la quantité entière de la composition de formation de sous-couche de résine.

6. Article anticondensation selon l'une quelconque des revendications 1 à 5, dans lequel chacun du premier agent durcisseur et du second agent durcisseur comprend un composé amine présentant un hydrogène actif.

7. Article anticondensation selon la revendication 6, dans lequel le rapport équivalent des hydrogènes actifs d'amine et des groupes d'époxy dans tous les composants constituant la composition de formation de couche de résine absorbant l'eau est de 0,6 à 0,8, et le rapport équivalent des hydrogènes actifs d'amine et des groupes d'époxy dans tous les composants constituant la composition de formation de sous-couche de résine est de 1,2 à 1,5.

8. Article anticondensation selon la revendication 6 ou 7, dans lequel le premier agent durcisseur inclut en outre un composé d'imidazole.

9. Article anticondensation selon la revendication 8, dans lequel la teneur en composé d'imidazole est de 1 à 20 % en masse par rapport au premier composant de polyépoxy.

10. Article anticondensation selon l'une quelconque des revendications 1 à 9, dans lequel le film anticondensation est exempt d'écaillage, de fissure et de blanchiment, dans un test tel que le film anticondensation est formé sur un côté d'un substrat de verre de 2 mm d'épaisseur, irradié avec de la lumière pendant 160 heures à travers le substrat de verre depuis le côté de surface sans film, sans film anticondensation du substrat de verre, en utilisant une machine de test de la résistance aux intempéries et au soleil avec une lampe à arc au carbone selon JIS D0205 (WAL-1H) et maintenu en outre dans une chambre à température constante et humidité constante à 85 °C sous 90 % d'humidité relative pendant 500 heures, et la surface du film anticondensation est lavée à l'éthanol.

11. Article anticondensation selon l'une quelconque des revendications 1 à 10, dans lequel le second composant de polyépoxy est constitué d'un polyépoxy aliphatique.

12. Article anticondensation selon l'une quelconque des revendications 1 à 11, dans lequel la composition de formation de couche de résine absorbant l'eau et la composition de formation de sous-couche de résine contiennent en outre un agent de couplage de silane.

13. Article anticondensation selon la revendication 12, dans lequel la teneur en agent de couplage de silane est de 5 à 40 % en masse par rapport à la masse totale du premier composant de polyépoxy et du premier agent durcisseur dans la composition de formation de couche de résine absorbant l'eau, et est de 5 à 50 % en masse par rapport à la masse totale du second composant de polyépoxy et du second agent durcisseur dans la composition de formation de sous-couche de résine.

14. Article anticondensation selon l'une quelconque des revendications 1 à 13, dans lequel la teneur en tétraalcoxysilane et/ou son oligomère est de 10 à 40 % en masse par rapport à la masse totale du second composant de polyépoxy et du second agent durcisseur.

15. Article anticondensation selon l'une quelconque des revendications 1 à 14, dans lequel la composition de formation de sous-couche de résine contient en outre un antioxydant.

16. Article anticondensation selon la revendication 15, dans lequel la teneur en antioxydant est de 0,5 à 3 % en masse par rapport à la masse totale du second composant de polyépoxy et du second agent durcisseur.

17. Article anticondensation selon l'une quelconque des revendications 1 à 16, dans lequel le substrat est un verre à chaux sodée.

18. Procédé de production de l'article anticondensation selon l'une quelconque des revendications 1 à 17, qui comprend :
une étape d'application de la composition de formation de sous-couche de résine contenant le second composant de polyépoxy et le second agent durcisseur, à la surface d'un substrat, suivie par la réaction pour former la sous-couche de résine composée principalement de la seconde résine époxy durcie ; et
une étape d'application à la surface de la sous-couche de résine, de la composition de formation de couche de résine absorbant l'eau contenant le premier composant de polyépoxy composé du polyépoxy de poids moléculaire bas présentant un poids moléculaire de 200 à 800 et le polyépoxy de poids moléculaire élevé présentant un poids moléculaire de 900 à 2 000 dans un rapport de masse du polyépoxy de poids moléculaire bas : le polyépoxy de poids moléculaire élevé de 30:70 à 70:30, et le premier agent durcisseur, suivie par la réaction pour former la couche de résine absorbant l'eau composée principalement de la première résine époxy durcie ;
dans lequel la composition de formation de sous-couche de résine contient en outre un tétraalcoxysilane et/ou son oligomère.

19. Procédé de production selon la revendication 18, dans lequel la réaction de la composition de formation de sous-couche de résine et la réaction de la composition de formation de couche de résine absorbant l'eau sont réalisées dans des conditions humidifiées de 40 à 80 % d'humidité relative.

20. Procédé de production selon la revendication 18 ou 19, dans lequel, après l'étape de formation de la couche de résine absorbant l'eau, le substrat obtenu doté de la sous-couche de résine et de la couche de résine absorbant l'eau est immergé dans de l'eau chaude.
